# EUROPÄISCHE PATENTSCHRIFT

(11) **EP 3 676 054 B1**
(45) Veröffentlichungstag und Bekanntmachung des Hinweises auf die Patenterteilung: **05.03.2025**
(21) Anmeldenummer: 18759936.0
(22) Anmeldetag: 27.08.2018
(51) Int. Cl.: B25F 5/00, F16H 3/64

(54) **HAND-WERKZEUGMASCHINE**
HAND-HELD POWER TOOL
MACHINE-OUTIL PORTATIVE

(30) Priorität: 29.08.2017 DE 102017119808
(43) Veröffentlichungstag der Anmeldung: 08.07.2020
(73) Patentinhaber: Festool GmbH, 73240 Wendlingen (DE)
(72) Erfinder: HUGGENBERGER, Philipp, 86754 Munningen (DE)
(74) Vertreter: Patentanwälte Bregenzer und Reule Partnerschaftsgesellschaft mbB
(86) Internationale Anmeldenummer: PCT/EP2018/072959
(87) Internationale Veröffentlichungsnummer: WO 2019/042908

(56) Entgegenhaltungen:
- EP-A1- 2 551 063
- EP-A1- 3 147 077
- DE-A1- 102009 060 929

## Beschreibung

Die Erfindung betrifft eine Hand-Werkzeugmaschine mit einem Antriebsmotor, einem Getriebe und einer Werkzeugaufnahme, wobei ein Motorabtrieb des Antriebsmotors mit einem Getriebeantrieb des Getriebes und ein um eine Drehachse drehbarer Getriebeabtrieb des Getriebes mit der Werkzeugaufnahme drehgekoppelt sind, wobei das Getriebe ein erstes Schalt-Getriebeelement und ein zweites Schalt-Getriebeelement aufweist, die anhand einer Betätigungseinrichtung jeweils zwischen einer ersten Stellposition und einer zweiten Stellposition bezüglich eines Getriebegehäuses linear verstellbar sind, wobei die Betätigungseinrichtung mit den Schalt-Getriebeelementen gekoppelt ist und ein bezüglich eines Maschinengehäuses der Hand-Werkzeugmaschine um eine Betätigungsschwenkachse schwenkbar gelagertes und durch einen Bediener der Hand-Werkzeugmaschine manuell betätigbares Betätigungsglied aufweist, wobei das erste Schalt-Getriebeelement durch eine Schwenkbewegung des Betätigungsglieds um die Betätigungsschwenkachse linear entlang seiner Stellachse anhand eines Umlenkgetriebes verstellbar ist, wobei das Umlenkgetriebe einen sich ringförmig um das Getriebegehäuse erstreckenden und um die Betätigungsschwenkachse drehbar gelagerten Mitnahmering umfasst, der mit dem ersten Schalt-Getriebeelement zu dessen Linearverstellung anhand eines ersten Koppelelements gekoppelt ist.

Eine derartige Hand-Werkzeugmaschine ist beispielsweise in EP 1 886 769 A1 beschrieben. Die Hand-Werkzeugmaschine weist ein Vierganggetriebe auf, bei dem als Schalt-Getriebeelemente zwei Hohlräder vorhanden sind. Jedes Hohlrad oder Schalt-Getriebeelement kann durch eine Betätigungseinrichtung der Hand-Werkzeugmaschine geschaltet werden, wobei beide Hohlräder im Getriebegehäuse linear verstellt werden. Zur individuellen Betätigung der Hohlräder ist eine aufwändige Betätigungseinrichtung nötig.

Aus EP 2 551 063 A1 geht eine Hand-Werkzeugmaschine gemäß dem Oberbegriff des Anspruchs 1 mit einem Vierganggetriebe hervor. Das Vierganggetriebe ist durch eine Betätigungseinrichtung schaltbar, die drehbar und linear verstellbar ist. Zur Umlenkung einer Drehbewegung der Betätigungseinrichtung in eine Linearbewegung eines Schalt-Getriebeelements ist ein Umlenkgetriebe nötig. Beide Schalt-Getriebeelemente müssen individuell durch die Betätigungseinrichtung angesteuert werden.

Es ist daher die Aufgabe der vorliegenden Erfindung, eine Hand-Werkzeugmaschine mit einem verbesserten Bedienkonzept bereitzustellen.

Zur Lösung der Aufgabe ist eine Hand-Werkzeugmaschine gemäß der technischen Lehre des Anspruchs 1 vorgesehen.

Ein Grundgedanke ist dabei, dass im Prinzip der Mitnahmering einen Drehkörper oder ein Drehlager für das Betätigungsglied bildet. Das Betätigungsglied kann also mit dem Mitnahmering um das Getriebegehäuse schwenken, um das erste Schalt-Getriebeelement zu schalten. An diesem Mitnahmering wiederum ist das Betätigungsglied linear verschieblich gelagert, so dass es die Linearbewegung zur Verstellung des zweiten Schalt-Getriebeelements direkt ausführen kann. Ein weiterer Schlitten oder Träger für das Betätigungsglied oder das zweite Koppelelement ist nicht notwendig. Zudem ist es möglich, bei dieser Anordnung die beiden Betätigungsbewegungen, nämlich um die Betätigungslängsachse und um die Betätigungsschwenkachse, die parallel zueinander verlaufen können, überlagert durchzuführen, so dass simultan das erste Schalt-Getriebeelement und das zweite Schalt-Getriebeelement schaltbar sind und das Getriebe beispielsweis von einer ersten Schaltstellung oder einem ersten Gang unmittelbar in einen dritten Gang oder eine dritte Schaltstellung geschaltet werden kann, ohne dass zuvor die zweite oder eine dazwischen gelagerte Schaltstellung oder ein dazwischen angeordneter Gang gesteuert werden muss.

Gegenüber der eingangs erwähnten Ausführungsform eines Getriebes gemäß EP 1 886 769 A1 ist also eine einfachere Bedienung gegeben.

Im Hinblick auf EP 2 551 063 B1 ist die Betätigungseinrichtung und die Kopplung zwischen Betätigungseinrichtung und Schalt-Getriebeelementen einfacher aufgebaut. Insbesondere genügt zwischen dem Betätigungsglied und dem zweiten Schalt-Getriebeelement lediglich ein einzelnes Koppelelement, das zweite Koppelelement. Dieses kann sogar noch einstückig an das Betätigungsglied angeformt sein, wenn ein entsprechender Drehfreiheitsgrad zwischen dem zweiten Koppelelement und dem zweiten Schalt-Getriebeelement vorhanden ist.

Zwischen dem Betätigungsglied und dem ersten Schalt-Getriebeelement oder dem zweiten Schalt-Getriebeelement oder beiden ist zweckmäßigerweise eine Federanordnung angeordnet. Die Federanordnung belastet bei und/oder nach einer Betätigung des Betätigungsglieds das Schalt-Getriebeelement in seine jeweilige Stellposition oder eine der Position des Betätigungsglieds zugeordnete Stellposition. Wenn das Schalt-Getriebeelement seine Stellposition nicht erreichen kann, beispielsweise weil seine Verzahnung nicht mit der Verzahnung eines mit dem Schalt-Getriebeelement zusammenwirkenden Getrieberads fluchtet, sorgt die Federbelastung dafür, dass bei einer relativen Drehverstellung von Schalt-Getriebeelement und Getrieberad die beiden Komponenten ineinander formschlüssig eingreifen können.

Die Federanordnung zwischen dem zweiten Schalt-Getriebeelement und dem Betätigungsglied kann insbesondere durch das zweite Koppelelement, beispielsweise ausschließlich durch das zweite Koppelelement, bereitgestellt werden. Es ist aber auch möglich, dass eine davon separate Feder oder Federanordnung vorhanden ist. Weiterhin können eine Federanordnung und das federnde Koppelelement vorgesehen sein. Ohne weiteres kann aber auch die Federanordnung zwischen dem ersten Schalt-Getriebeelement und dem Betätigungsglied durch das erste Koppelelement bereitgestellt sein.

Das erste Koppelelement oder das zweite Koppelelement oder beide können beispielsweise ein Federelement umfassen oder sein. Insbesondere eignet sich ein Federbügel oder dergleichen als federndes, nachgiebiges Koppelelement, z.B. wie in EP 1 886 769 B1 beschrieben.

Das erste Koppelement und/oder das zweite Koppelelement umfasst zweckmäßigerweise einen Federbügel oder wird durch einen Federbügel gebildet. Der Federbügel erstreckt sich zweckmäßigerweise ringförmig um das erste Schalt-Getriebeelement oder das zweite Schalt-Getriebeelement. Der Federbügel kann beispielsweise Bügelarme haben, die federnd nachgiebig sind. Der Federbügel greift zweckmäßigerweise mit seinen Längsendbereichen in entsprechende Aufnahmen, beispielsweise Bohrungen, Nuten, Führungen, insbesondere Längsführungen oder dergleichen, am jeweiligen ersten oder zweiten Schalt-Getriebeelement ein.

Eine günstige und einfache Ausführungsform sieht vor, dass das Betätigungsglied mit dem zweiten Schalt-Getriebeelement ausschließlich durch das zweite Koppelelement oder durch ein einziges Bauteil gekoppelt ist. Mithin ist also zwischen dem Schalt-Getriebeelement und dem Betätigungsglied kein weiteres Bauteil notwendig. Insbesondere eignet sich der bereits erwähnte Federbügel als zweites Koppelelement, welches als einziges Bauteil ausreicht, um die Kopplung zwischen Betätigungsglied und zweiten Schalt-Getriebeelement zu realisieren.

Zwischen dem Mitnahmering und dem ersten Koppelelement ist erfindungsgemäß ein beispielsweise ringförmiges, stabförmiges oder dergleichen anders ausgestaltetes Übertragungsglied angeordnet, welches durch den Mitnahmering um die Betätigungsschwenkachse mitnehmbar ist. Das Übertragungsglied und der Mitnahmering sind relativ zueinander beweglich, beispielsweise relativ zueinander verdrehbar und/oder verschieblich. Zwischen dem Übertragungsglied und dem Mitnahmering ist eine durch eine Relativbewegung des Übertragungsglied und des Mitnahmerings betätigbare Federanordnung zur Federbelastung des ersten Stell-Getriebeelements in mindestens eine Schaltposition angeordnet. Mithin kann also der Mitnahmering bereits eine Dreh-Endstellung erreichen, während das Übertragungsglied diese Endstellung noch nicht erreicht hat und in durch das Federelement oder die Federanordnung in die Endstellung belastet wird. Wenn das erste Stell-Getriebeelement eine geeignete Position in Bezug auf ein zu schaltendes Bauteil, beispielsweise ein Getrieberad hat, wird sie durch die Federanordnung in diese Endstellung gedrückt oder verstellt.

An dem Mitnahmering oder einem durch den Mitnahmering um die Betätigungsschwenkachse mitnehmbaren Übertragungsglied, beispielsweise dem vorgenannten, relativ zum Mitnahmering verstellbaren Überragungsglied, ist zweckmäßigerweise mindestens eine Führungskulisse zur Umlenkung der Bewegung des Betätigungsglieds um die Betätigungsschwenkachse in eine Linearbewegung des ersten Stell-Getriebeelements angeordnet. In die Führungskulisse greift beispielsweise das erste Koppelelement oder ein damit verbundener Körper oder damit gekoppelter Körper, ein. Vorzugsweise sind zwei Führungskulissen vorgesehen, die an einander entgegengesetzten Seiten des Getriebegehäuses oder der Getriebe-Haltestruktur angeordnet sind.

Das zweite Koppelelement ist zweckmäßigerweise bezüglich des Getriebegehäuses schwenkbar und/oder verschieblich gelagert. Mithin ist es als möglich, dass das zweite Koppelelement, welches linear verstellt wird, die Linearbewegung aufgrund einer Verschiebung relativ zum Getriebegehäuse auf das zweite Stell-Getriebeelement überträgt. Allerdings ist auch eine Schwenklagerung oder eine kombinierte Schwenklagerung und Schiebelagerung des zweiten Koppelelements möglich.

Das zweite Koppelelement ist zweckmäßigerweise an einem am Getriebegehäuse vorgesehenen Schwenklager, beispielsweise einem vor einem Umfangswand des Getriebegehäuses vorstehenden Lagerzapfen oder einer in der Umfangswand des Getriebegehäuses angeordneten Lageraufnahme, schwenkbar gelagert. Das zweite Koppelelement kann auch alternativ oder ergänzend dazu an dem Betätigungsglied schwenkbar gelagert sein. Die Lageraufnahme kann beispielsweise durch eine Längsnut realisiert sein. Diese Längsnut kann auch die nachfolgend beschriebene bogenförmige Führungsaufnahme sein. Wenn Lagerzapfen oder Lageraufnahmen am Getriebegehäuse vorgesehen sind, sind diese zweckmäßigerweise an einander entgegengesetzten Seiten des Getriebegehäuses und/oder an einem Bereich des größten Umfangs des Getriebegehäuses vorgesehen. Mithin stehen also die Lagerzapfen beispielsweise radial vor die Umfangswand des Getriebegehäuses vor.

Das Betätigungsglied weist zweckmäßigerweise eine sich bogenförmig um die Betätigungsschwenkachse erstreckende Führungsaufnahme auf, in die das zweite Koppelelement eingreift. Insbesondere hat das zweite Koppelelement einen geradlinigen oder bogenförmigen Abschnitt, der in die vorgenannte Führungsaufnahme eingreift. Es ist möglich, dass die Führungsaufnahme auch eine ausreichende Tiefe hat, so dass ein bogenförmiger Bewegungsfreiraum vorhanden ist, in den das zweite Koppelelement eingreifen kann, wenn es um die Betätigungsschwenkachse schwenkt.

Bevorzugt ist eine Rastanordnung vorgesehen, die zum Verrasten des Betätigungsglieds in mindestens einer Betätigungsposition dient. Die Rastanordnung weist beispielsweise einen Rastaufnahme oder eine Anordnung mehrerer Rastaufnahmen an dem Betätigungsglied auf. Bevorzugt ist die Rastanordnung verdeckt angeordnet. Bevorzugt ist die Rastanordnung an einer Unterseite des Betätigungsglieds vorgesehen und/ oder zwischen dem Betätigungsglied und dem Getriebegehäuse angeordnet. An dem Betätigungsglied können beispielsweise eine oder mehrere Rastaufnahmen vorgesehen sein, in die ein Rastglied, insbesondere ein angefedertes oder federndes Rastglied, eingreift, welches am Getriebegehäuse angeordnet ist. Das federnde Rastglied kann aber auch am Betätigungsglied angeordnet sein und in Rastaufnahmen am Getriebegehäuse eingreifen. Somit kann das Betätigungsglied in einer jeweiligen Schaltstellung des Getriebes zugeordneten Betätigungsposition verrastet werden, beispielsweise in den jeweiligen Längsendpositionen bezüglich der Betätigungslängsachse und/oder einer Schwenkposition bezüglich der Betätigungsschwenkachse.

Das Betätigungsglied ist zweckmäßigerweise an einer Linearführung des Mitnahmerings linear verschieblich gelagert. Mithin hat also der Mitnahmering eine Linearführung, die eine oder mehrere Führungsnuten oder dergleichen andere Linearführungselemente aufweist. Es können auch Linearführungsvorsprünge vorgesehen sein, beispielsweise Längsrippen oder dergleichen, die vom Mitnahmering abstehen und in entsprechende Längsführungsnuten des Betätigungsglieds eingreifen. Mithin sind also Linearführungskomponenten am Mitnahmering und am Betätigungsglied vorhanden.

Eine weitere Ausführungsform sieht vor, dass das Betätigungsglied an einem Maschinengehäuse der Hand-Werkzeugmaschine geführt ist. Beispielsweise hat eine Wand des Maschinengehäuses eine Aussparung oder Ausnehmung, in der das Betätigungsglied angeordnet ist. An einem oder mehreren Randbereichen der Ausnehmung können Führungsaufnahmen, insbesondere Führungsnuten, Taschen oder dergleichen, zur Führung des Betätigungsglieds vorgesehen sein.

Das zweite Koppelelement greift zweckmäßigerweise in eine Aussparung der Linearführung ein. Beispielsweise hat die Linearführung Linearführungsabschnitte, zwischen denen die Aussparung angeordnet ist. Die Linearführungsabschnitte sind zweckmäßigerweise durch Verbindungsabschnitte verbunden. Zwischen die Verbindungsabschnitte und das Betätigungsglied greift das zweite Koppelelement ein.

Die Linearführung umfasst zweckmäßigerweise zwei in einem Winkelabstand bezüglich der Betätigungsschwenkachse zueinander angeordnete Linearführungsabschnitte auf. Mithin kann also das Betätigungsglied an zwei oder weiteren Linearführungsabschnitten, die auch unterbrochen sein können, beispielsweise wegen der vorgenannten Aussparung, geführt sein.

Das Betätigungsglied weißt zweckmäßigerweise mindestens einen Stützabschnitt zur Abstützung an dem Getriebegehäuse auf. Mithin ist also das Betätigungsglied einerseits am Mitnahmering, andererseits auch am Getriebegehäuse abgestützt.

Bevorzugt ist es, wenn das Betätigungsglied eine bogenförmige oder tonnenförmige Wandgestalt aufweist. Mithin ist es vorteilhaft, wenn das Betätigungsglied die von ihm zu betätigenden Komponenten und/oder die Rastanordnung, abdeckt.

Eine weitere Ausführungsform kann vorsehen, dass das Betätigungsglied zueinander beabstandete Längsendbereiche des Mitnahmerings miteinander verbindet. Der Mitnahmering hat also zwischen seinen Längsendbereichen einen Abstand, der durch das Betätigungsglied überbrückt wird. Beispielsweise greift das Betätigungsglied in an den Längsendbereich angeordnete Linearführungsabschnitte ein, so dass diese in Bezug auf die Betätigungsschwenkachse miteinander verbunden sind. Das Betätigungsglied schließt sozusagen den Mitnahmering.

An dieser Stelle sei erwähnt, dass der Mitnahmering ein geschlossener Ring sein kann, d.h. dass er das Getriebegehäuse vollständig umschließt. Es ist aber auch möglich, dass der Mitnahmering nur einen Teilring darstellt. Mithin kann also der Mitnahmering als Ringsegment ausgestaltet sein. Der Mitnahmering erstreckt sich vorzugsweise um mindestens die Hälfte des Außenumfangsbereichs des Getriebegehäuses, also um mindestens 180 Grad. Bevorzugt ist es, wenn sich der Mitnahmering um mindestens 270 bis 300 Grad des Außenumfangs des Getriebegehäuses erstreckt.

Eine vorteilhafte Ausführungsform sieht vor, dass das Getriebe zwischen mindestens zwei Schaltstellungen schaltbar ist, in denen Drehzahlverhältnisse zwischen dem Getriebeantrieb und dem Getriebeabtrieb voneinander verschieden sind, wobei das Getriebe eine erste Getrieberadanordnung und mindestens eine zweite Getrieberadanordnung umfasst, die jeweils mindestens ein Getrieberad sowie ein Schalt-Getriebeelement aufweisen, von denen eines der Schaltaktor und das andere das durch den Schaltaktor schaltbare Schalt-Getriebeelement ist, wobei bei beiden Getrieberadanordnungen das mindestens eine Getrieberad am Schalt-Getriebeelement der Getrieberadanordnung und/oder das Schalt-Getriebeelement an dem mindestens einen Getrieberad der Getrieberadanordnung abwälzen kann und das jeweilige Schalt-Getriebeelement zum Einstellen der Schaltstellungen des Getriebes an der Getriebe-Haltestruktur zwischen mindestens zwei Stellpositionen örtlich verstellbar gelagert und/oder bezüglich der Getriebe-Haltestruktur zwischen einer unbeweglichen Stellung und beweglichen Stellung verstellbar ist, und dass zum Schalten des Getriebes zwischen mindestens zwei der Schaltstellungen das Schalt-Getriebeelement der ersten Getrieberadanordnung einen Schaltaktor für die zweite Getrieberadanordnung bildet, der zwischen einer ersten Stellposition und mindestens einer zweiten Stellposition schaltbar ist, in denen eine Beweglichkeit des Schalt-Getriebeelements der zweiten Getrieberadanordnung bezüglich der Getriebe-Haltestruktur verschieden ist und/oder der Schaltaktor außer Eingriff und in Eingriff mit dem mindestens einen Getrieberad der zweiten Getrieberadanordnung ist.

Es ist dabei ein Grundgedanke, dass das Schalt-Getriebeelement der ersten Getrieberadanordnung einerseits als Schaltelement direkt für die erste Getrieberadanordnung wirkt, andererseits aber auch das Drehverhalten der zweiten Getrieberadanordnung direkt oder indirekt beeinflusst, welche ja an sich durch ihr eigenes Schalt-Getriebeelement an sich schaltbar ist. Der Schaltaktor kann dabei direkt mit einem oder mehreren Getrieberädern der zweiten Getrieberäderanordnung in Eingriff sein, beispielsweise einen Planetenradsatz mit der zweiten Getriebeanordnung mit einem Planetenradsatz der ersten Getrieberadanordnung, die das mindestens eine Getrieberad der ersten Getrieberadanordnung bildet oder umfasst, fest koppeln oder kuppeln. Die Planetenradsätze sind dann relativ zueinander nicht mehr drehbar und durch das Schalt-Getriebeelement, beispielsweise ein Hohlrad, miteinander drehfest gekoppelt.

Ein anderes oder ergänzend mögliches Ausführungsbeispiel sieht vor, dass der Schaltaktor, also das Schalt-Getriebeelement der ersten Getrieberadanordnung, auf das Schalt-Getriebeelement der zweiten Getrieberadanordnung in der ersten Stellposition Einfluss hat, so dass es beispielsweise bezüglich des Getriebegehäuses nicht mehr drehen kann, in der zweiten Stellposition des Schalt-Getriebeelements jedoch das Schalt-Getriebeelement der zweiten Getriebeanordnung drehbar bezüglich des Getriebegehäuses ist. Somit kann also das zweite Schalt-Getriebeelement beispielsweise eine Wälzbasis für das mindestens eine Getrieberad der zweiten Getrieberadanordnung bilden, welches an dem zweiten Schalt-Getriebeelement dementsprechend abwälzen kann.

Bevorzugt handelt es sich bei den Schalt-Getriebeelementen und den Getrieberädern der Getrieberadanordnungen um Zahnräder. Selbstverständlich wäre die Erfindung aber auch bei einem Rollradgetriebe oder Reibradgetriebe ohne weiteres möglich.

In jedem Fall ermöglicht die Erfindung, dass an sich nur das Schalt-Getriebeelement der ersten Getrieberadanordnung verstellt werden muss, um nicht nur die erste Getrieberadanordnung, sondern auch die zweite Getrieberadanordnung zu schalten. Die Betätigung ist dadurch wesentlich einfacher. Beispielsweise ist eine Betätigungseinrichtung einfacher aufzubauen, die nur mit dem Schalt-Getriebeelement der ersten Getrieberadanordnung gekoppelt sein muss bzw. dieses ansteuert, um nicht nur auf die erste Getrieberadanordnung, sondern auch auf die zweite Getrieberadanordnung einzuwirken. Beispielsweise kann dadurch eine Gehäuseöffnung an einem Getriebegehäuse des Getriebes entfallen, die ansonsten zur Ansteuerung bzw. Betätigung des Schalt-Getriebeelementes der zweiten Getrieberadanordnung notwendig wäre.

Eine Konfiguration kann vorsehen, dass das Schalt-Getriebeelement der zweiten Getrieberadanordnung in der ersten Stellposition des Schaltaktors bezüglich der Getriebe-Haltestruktur, also beispielsweise dem Getriebegehäuse, drehfest und in der zweiten Stellposition bezüglich der Getriebe-Haltestruktur drehbar ist. In der drehfesten Stellung des Schalt-Getriebeelementes der zweiten Getrieberadanordnung können sich beispielsweise Planetenräder, also das mindestens eine Getrieberad der zweiten Getrieberadanordnung, am Schalt-Getriebeelement abwälzen. In der drehbaren Stellung des Schalt-Getriebeelementes der zweiten Getrieberadanordnung kann das mindestens eine Getrieberad, beispielsweise ein Planetenrad, der zweiten Getrieberadanordnung das Schalt-Getriebeelement mitnehmen oder mitdrehen.

Das Schalt-Getriebeelement der zweiten Getrieberadanordnung weist vorteilhaft zur drehfesten Festlegung bezüglich der Getriebe-Haltestruktur beispielsweise des Getriebegehäuses, mindestens eine Verdrehsicherungskontur zum Eingriff in eine Formschluss-Gegenkontur der Getriebe-Haltestruktur und/oder des den Schaltaktors bildenden Schalt-Getriebeelementes auf. Die Verdrehsicherungskontur und die Formschluss-Gegenkontur können beispielsweise eine Paarung aus Zähnen und Zahnzwischenräumen oder Zahnaufnahmen, eine Paarung aus Verdrehsicherungsvorsprung und Verdrehsicherungsaufnahme, eine Rillenstruktur oder dergleichen sein. Es ist möglich, dass das Schaltgetriebeelement der zweiten Getriebeanordnung mehrere oder sich an verschiedenen Seiten befindende Verdrehsicherungskonturen aufweist, so dass es an mehreren Komponenten formschlüssig festlegbar ist, beispielsweise an einer gehäusefesten Formschluss-Gegenkontur des Getriebegehäuses und/oder am Schaltaktor.

Beispielsweise ist die Verdrehsicherungskontur an einem radialen Außenumfang, an einer Stirnseite oder beiden des durch den Schaltaktor schaltbaren Schalt-Getriebeelementes angeordnet. Dort können beispielsweise Zahnstrukturen vorgesehen sein.

Das Schalt-Getriebeelement, welches den Schaltaktor bildet, kann als Formschluss-Gegenkontur eine bogenförmige Verzahnung an seinem Innenumfang aufweisen, mit der in der ersten Stellposition die Verdrehsicherungskontur des durch den Schaltaktor schaltbaren Schalt-Getriebeelementes in Eingriff ist und in der zweiten Stellposition das mindestens eine Getrieberad der ersten Getrieberadanordnung, beispielsweise dessen radiale äußere Verzahnung, in Eingriff ist. Beispielsweise kämmt dieses Getrieberad mit dem Schalt-Getriebeelement oder Schaltaktor.

In der ersten Stellposition ist es vorteilhaft, wenn das den Schaltaktor bildende Schalt-Getriebeelement ganz außer Eingriff mit dem mindestens einen Getrieberad der ersten Getrieberadanordnung ist, insbesondere außer direktem Eingriff mit dem mindestens einen Getrieberad der ersten Getrieberadanordnung oder allen Getrieberädern der ersten Getrieberadanordnung. Mithin erfüllt das Schalt-Getriebeelement nur noch die Funktion eines Schaltaktors für das andere Schalt-Getriebeelement, das Schalt-Getriebeelement der zweiten Getrieberadanordnung.

Es ist aber auch eine Konfiguration möglich, bei der das Schalt-Getriebeelement der ersten Getrieberadanordnung in Eingriff mit dem mindestens einen Getrieberad der ersten Getrieberadanordnung, beispielsweise einem Planetenradsatz oder mindestens zwei Planetenrädern, der ersten Getrieberadanordnung ist, wenn der Schaltaktor die erste Schaltposition einnimmt. Dies ist beispielsweise bei einer Kopplung von Planetenradsätzen eine mögliche Konfiguration, die Bestandteile der ersten Getrieberadanordnung und der zweiten Getrieberadanordnung bilden.

In der zweiten Stellposition des den Schaltaktor bildenden Schaltgetriebeelementes ist das Schalt-Getriebeelement der mindestens einen zweiten Getrieberadanordnung, also das geschaltete Schalt-Getriebeelement, bezüglich der Getriebe-Haltestruktur drehbar, so dass es durch das mindestens eine Getrieberad der mindestens einen zweiten Getrieberadanordnung mitnehmbar ist. Mithin kann also das Schalt-Getriebeelement der zweiten Getrieberadanordnung in der zweiten Stellposition des Schaltaktors drehen und somit von dem einen oder mehreren Getrieberädern der zweiten Getrieberadanordnung mitgenommen werden.

Das durch den Schaltaktor schaltbare Schalt-Getriebeelement ist zweckmäßigerweise bezüglich der Getriebehaltestruktur drehbar gelagert. Es kann auch ergänzend oder alternativ dazu linear unverschieblich an oder in der Getriebe-Haltestruktur aufgenommen sein. Insbesondere ist es vorteilhaft, wenn das Schalt-Getriebeelement der zweiten Getrieberadanordnung bezüglich einer Drehachse des Getriebeabtriebs des Getriebes oder seiner eigenen Drehachse unverschieblich ist.

Für die drehbare Lagerung des durch den Schaltaktor schaltbaren Schalt-Getriebeelementes der zweiten Getrieberadanordnung kann beispielsweise eine an dem Getriebegehäuse oder der Getriebe-Haltestruktur angeordnetes Lager vorgesehen sein, zum Beispiel eine Lagernut und ein Lagervorsprung, ein Wälzlager, insbesondere ein Nagellager, Kugellager oder dergleichen. Vorzugsweise ist beispielsweise ein Stützkörper bezüglich der Getriebe-Haltestruktur ortsfest angeordnet, an dessen Außenumfang und/oder Innenumfang das Schalt-Getriebeelement der zweiten Getrieberadanordnung drehbar gelagert ist. Zur drehbaren Lagerung des Schalt-Getriebeelementes kann aber auch das mindestens eine Getrieberad der zweiten Getrieberadanordnung vorgesehen sein. Mithin kann also das Schalt-Getriebeelement der zweiten Getrieberadanordnung auf einem oder mehreren Getrieberädern der zweiten Getrieberadanordnung oder anhand der Getrieberäder drehbar gelagert sein. Dies ist zum Beispiel bei einer Ausgestaltung des Schalt-Getriebeelementes der zweiten Getrieberadanordnung als Hohlrad möglich, welches einen Planetenradsatz ringförmig umgibt und auf dem Planetenradsatz gelagert ist.

Weiterhin ist es vorteilhaft, wenn das Schalt-Getriebeelement der zweiten Getrieberadanordnung nur durch das den Schaltaktor bildende Schalt-Getriebeelement oder Schalt-Getriebeelement der ersten Getrieberadanordnung schaltbar oder betätigbar ist. Eine Betätigungseinrichtung, die beispielsweise direkt durch den Bediener von einer Außenseite des Maschinengehäuses her betätigbar ist, ist also mit dem Schalt-Getriebeelement der zweiten Getrieberadanordnung nur über das Schalt-Getriebeelement der ersten Getrieberadanordnung und/oder nicht direkt, gekoppelt.

Das den Schaltaktor bildende Schalt-Getriebeelement ist zweckmäßigerweise bezüglich der Getriebe-Haltestruktur linear, beispielsweise parallel zu einer Drehachse des Getriebeantriebs und/oder des Getriebeabtriebs oder seiner eigenen Drehachse, zwischen der ersten Stellposition und der zweiten Stellposition verschieblich gelagert. Das den Schaltaktor bildende Schalt-Getriebeelement ist zweckmäßigerweise in einer, zwei oder mehreren, insbesondere Einstellpositionen bezüglich der Getriebe-Haltestruktur Drehpunkt. Es ist möglich, dass das sozusagen das Schalt-Getriebeelement der ersten Getrieberadanordnung in einer Stellposition drehbar ist, beispielsweise in einer Zwischen-Stellposition, die sich zwischen zwei weiteren Stellpositionen befindet. Der Bediener kann also den Schaltaktor sozusagen aus einer drehfesten Stellposition in eine drehbare Stellposition bezüglich des Getriebegehäuses oder der Getriebe-Haltestruktur bringen, indem er es beispielsweise linear verstellt, verdreht oder dergleichen.

Weiterhin ist es vorteilhaft, wenn eines oder mehrere, insbesondere alle, Schalt-Getriebeelemente in eine jeweilige Schaltposition federbelastet ist bzw. sind. So kann beispielsweise das Schalt-Getriebeelement der zweiten Getrieberadanordnung durch eine Federanordnung in eine oder beide der ersten und zweiten Stellpositionen federbelastet sein. Wenn also die Zahnung beispielsweise eines der Schaltgetriebeelemente bezüglich des zu schaltenden oder mit ihm kämmenden jeweiligen Getrieberad der ersten oder zweiten Getrieberadanordnung nicht passt, sorgt die Federbelastung dafür, dass bei ineinander passender Zahnung die jeweiligen Zähne ineinander gleiten.

Die mit den Schalt-Getriebeelementen in Wälz-Eingriff stehenden oder bringbaren Getrieberäder der ersten Getrieberadanordnung und der mindestens einen zweiten Getrieberadanordnung sind in Bezug auf ihren Durchmesser zweckmäßigerweise verschieden und/oder haben in Bezug auf ihren Durchmesser voneinander verschiedene Wälzumfänge zum Wälzeingriff mit dem jeweils zugeordneten Schalt-Getriebeelement. Dadurch lassen sich unterschiedliche Drehzahlverhältnisse zwischen Getriebeantrieb und Getriebeabtrieb günstig einstellen.

Zweckmäßigerweise ist vorgesehen, dass ein radialer Außenumfang des Schalt-Getriebeelements der zweiten Getrieberadanordnung mit dem radialen Außenumfang des mindestens einen Getrieberads der ersten Getrieberadanordnung fluchtet, sodass das den Schaltaktor bildende Schalt-Getriebeelement zwischen den Außenumfängen des Schalt-Getriebeelements der zweiten Getrieberadanordnung und der mindestens ein Getrieberad der ersten Getrieberadanordnung linear, insbesondere parallel zu einer Drehachse des Getrieberads, verstellbar ist. Das Schalt-Getriebeelement der zweiten Getrieberadanordnung steht also nach radial außen nicht vor das mindestens eine Getrieberad der ersten Getrieberadanordnung vor, sondern fluchtet damit. Dieses Fluchten ist allerdings so zu verstehen, dass durchaus ein Winkelversatz zwischen Formschlusskonturen, beispielsweise Zahnungen, des linear zu verstellenden Schalt-Getriebeelements und dem Schalt-Getriebeelement der zweiten Getrieberadanordnung oder dem mindestens einen Getrieberad der ersten Getrieberadanordnung vorhanden sein kann, der jedoch bei einer weiteren Bewegung des Getriebes derart aufgehoben ist, dass die Linearverstellung des Schalt-Getriebeelements möglich ist. Beispielsweise ist das Schalt- Getriebeelement der zweiten Getrieberadanordnung ein Hohlrad, welches am Außenumfang eines oder mehrere Planetenräder der zweiten Getrieberadanordnung angeordnet ist und an seinem Außenumfang eine Verzahnung aufweist, die die gleiche Zahngeometrie aufweist, wie das mindestens eine Getrieberad, insbesondere Planetenrad, der ersten Getrieberadanordnung, und mit dem Getrieberad der ersten Getrieberadanordnung fluchtet, sodass das als Hohlrad ausgestaltete und als Schaltaktor dienende Schalt-Getriebeelement zwischen den Außenumfängen des Hohlrads der zweiten Getrieberadanordnung und dem mindestens ein Getrieberad der ersten Getrieberadanordnung linear verstellbar ist.

Die mit den Schaltgetriebeelementen in Wälzeingriff stehenden oder bringbaren Getrieberäder der ersten Getrieberadanordnung und der mindestens einen zweiten Getrieberadanordnung sind beispielsweise drehfest miteinander verbunden oder einstückig. Sie können auch Stufenräder oder Stufenplanetenräder bilden.

Weiterhin ist es möglich, dass die mit den Schaltgetriebeelementen in Wälzeingriff stehenden oder bringbaren Getrieberäder der ersten Getrieberadanordnung und der mindestens einen zweiten Getrieberadanordnung zwar voneinander getrennt sind, jedoch an einem gemeinsamen Planetenradträger oder Steg anordnet sind.

Eine weitere Ausführungsform der Erfindung sieht vor, dass der Getriebeantrieb mit einem Sonnenrad drehfest verbunden oder drehgekoppelt ist, welches in Wälzeingriff mit dem mindestens einen Getrieberad der ersten Getrieberadanordnung ist. Denkbar wäre aber auch, dass das Sonnenrad mit einem oder mehreren Getrieberädern, beispielsweise Planetenrädern, der zweiten Getrieberadanordnung in Eingriff ist.

Die Getrieberäder der ersten Getrieberadanordnung und der zweiten Getrieberadanordnung können zwar an einem gemeinsamen Planetenradträger oder Steg angeordnet sein, aber auch an voneinander separaten, insbesondere relativ zueinander verdrehbaren oder relativ zueinander beweglichen Planetenradträgern oder Stegen.

Die erste Getrieberadanordnung und die zweite Getrieberadanordnung bilden zweckmäßigerweise eine erste Getriebestufe, wobei das Getriebe mindestens eine zweite Getriebestufe, beispielsweise eine Planetenstufe aufweist. Die erste Getriebestufe ist in Bezug auf den Getriebeabtrieb der zweiten Getriebestufe vorgeschaltet oder nachgeschaltet. Insbesondere sind also die Getriebestufen sequentiell hintereinander angeordnet.

Die zweite Getrieberadstufe kann eine ein festes Drehzahlverhältnis bereitstellende Getriebestufe sein, d.h. lediglich eine drehzahlreduzierende oder eine drehzahlerhöhende Getriebestufe sein, die nicht schaltbar ist. Bevorzugt ist jedoch eine schaltbare Konfiguration. Die zweite Getriebestufe ist zweckmäßigerweise zwischen mindestens zwei Schaltstellungen schaltbar, in denen ein Drehzahlverhältnis zwischen einem Antrieb der zweiten Getriebestufe und einem Abtrieb der zweiten Getriebestufe unterschiedlich ist. So kann beispielsweise ein Vierganggetriebe realisiert werden.

Das Getriebe ist zweckmäßigerweise ein Planetengetriebe. Es sind aber auch andere Getriebeformen ohne weiteres möglich.

Das erste und/oder das zweite Stell-Getriebeelement umfasst zweckmäßigerweise ein Hohlrad oder wird durch ein Hohlrad gebildet.

Die nachfolgend in der Zeichnung noch näher beschriebene Ausführungsform der Erfindung zeigt eine Schraubmaschine oder Bohrmaschine. Selbstverständlich ist die Erfindung auch bei anderen Hand-Werkzeugmaschinen anwendbar, beispielsweise Fräsmaschinen, Schneidmaschinen, Sägen, Schleifmaschinen, Poliermaschinen oder dergleichen. Das erfindungsgemäße Getriebe und/oder die Betätigungseinrichtung können aber auch beispielsweise bei Hand-Werkzeugmaschinen eingesetzt werden, die eine oszillatorisch angetriebene, beispielsweise linear hin-und-her-bewegte Werkzeugaufnahme aufweisen.

Die Hand-Werkzeugmaschine weist zweckmäßigerweise eine Werkzeugaufnahme für ein Arbeitswerkzeug und/oder ein Arbeitswerkzeug auf, beispielsweise ein Bohrwerkzeug, Schraubwerkzeug oder dergleichen. Aber auch ein Schneidwerkzeug, Fräswerkzeug oder dergleichen können vorgesehen sein.

Der Getriebeabtrieb des Getriebes ist zweckmäßigerweise direkt mit einer Werkzeugaufnahme der Hand-Werkzeugmaschine drehgekoppelt. Es kann z.B. eine Aufnahme für ein Schrauberbit, ein Bohrfutter, Schraubfutter oder dergleichen anderes Werkzeug-Futter vorgesehen sein. Weiterhin ist es vorteilhaft, wenn am Getriebeabtrieb noch ein Schlagwerk angeordnet ist, beispielsweise ein Axial-Schlagwerk

Weiterhin ist es möglich, dass zwischen dem Getriebe und einer Werkzeugaufnahme der Hand-Werkzeugmaschine ein Umlenkgetriebe vorhanden ist, beispielsweise ein Winkelgetriebe, oder ein Umwandlungsgetriebe, welches die drehende Abtriebsbewegung des Getriebeabtriebs in eine oszillatorische Linearbewegung oder eine hyperzykloide und/oder exzentrische Bewegung der Werkzeugaufnahme umwandelt.

Nachfolgend wird ein Ausführungsbeispiel der Erfindung anhand der Zeichnung erläutert. Es zeigen:

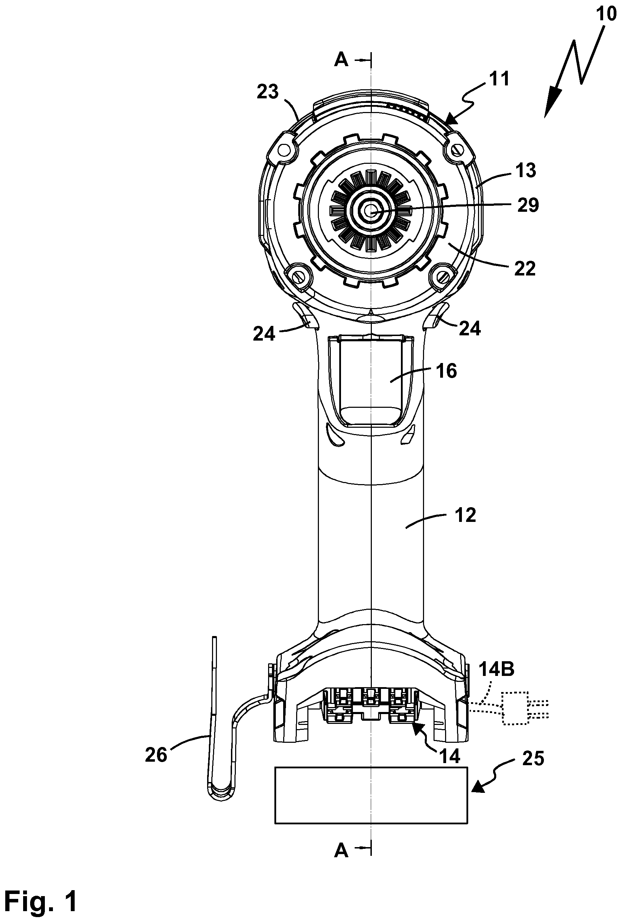

- Figur 1: eine Frontalansicht einer Hand-Werkzeugmaschine gemäß der Hand-Werkzeugmaschine, die in
- Figur 2: im Querschnitt entlang einer Schnittlinie A-A in Figur 1 dargestellt ist,

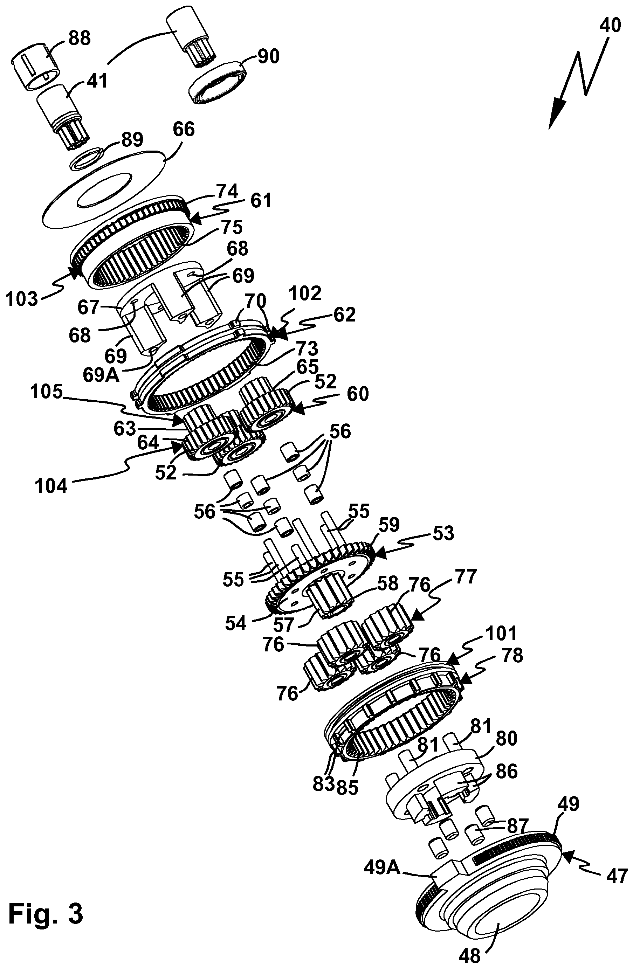

- Figur 3: eine Explosionsdarstellung eines Getriebes der Hand-Werkzeugmaschine gemäß vorstehender Figuren,
- Figur 4: eine Explosionsdarstellung eines Antriebsstrangs der Hand-Werkzeugmaschine einschließlich des Getriebes und mit einem Bohrfutter,
- Figur 5: eine Explosionsdarstellung einer Betätigungseinrichtung für das Getriebe,
- Figur 6: eine untere Ansicht eines Betätigungsglieds der Betätigungseinrichtung gemäß Figur 5,
- Figur 7: eine Draufsicht auf das Betätigungsglied gemäß Figur 6 im in das Gehäuse der Hand-Werkzeugmaschine eingebauten Zustand,

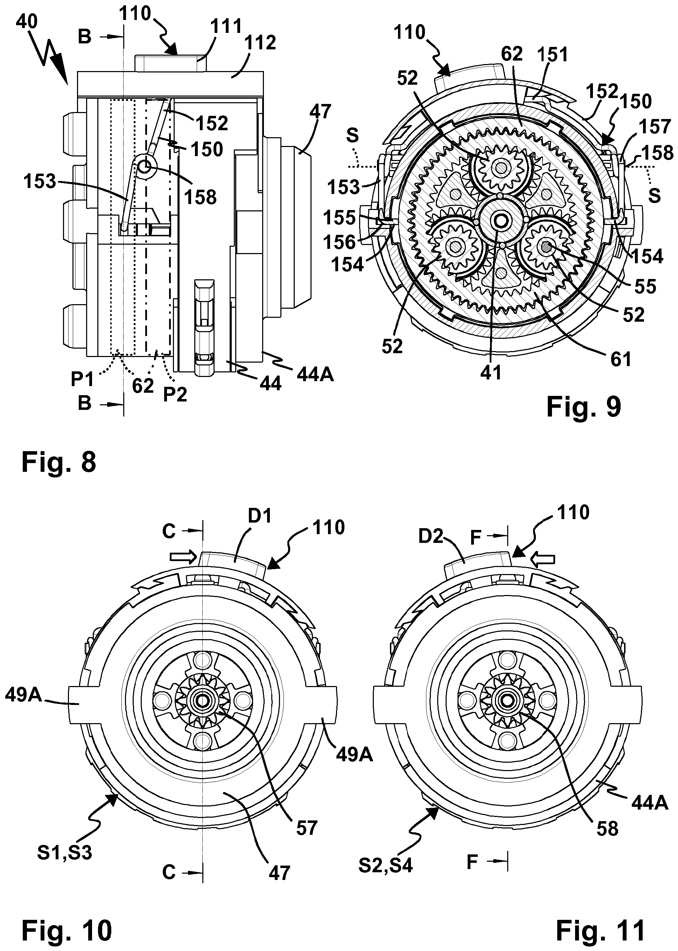

- Figur 8: eine Seitenansicht des Getriebes, gemäß Figur 3,
- Figur 9: eine Schnittdarstellung des Getriebes gemäß Figur 8 entlang einer Schnittlinie B-B in Figur 8,
- Figur 10: eine Frontalansicht auf das Getriebe gemäß vorstehender Figuren, etwa in Blickrichtung entsprechend Figur 1 in einer ersten und zweiten Schaltstellung des Getriebes,
- Figur 11: die Ansicht entsprechend Figur 10 jedoch in einer dritten und vierten Schaltstellung des Getriebes,
- Figur 12: das Getriebe gemäß vorstehender Figuren in einer Schnittdarstellung entsprechend einer Schnittlinie C-C in Figur 10 in einer ersten Schaltstellung,
- Figur 13: das Getriebe gemäß Figur 12, jedoch in einer zweiten Schaltstellung,
- Figur 14: eine Querschnittsansicht des Getriebes gemäß vorstehender Figuren in einer dritten Schaltstellung, etwa entsprechend einer Schnittlinie F-F in Figur 11 und
- Figur 15: eine Querschnittsansicht des Getriebes etwa entsprechend Figur 14, jedoch in einer vierten Schaltstellung.

Eine Handwerkzeugmaschine 10, beispielsweise ein Schraubgerät, weist ein Maschinengehäuse 11 auf, welches vorzugsweise pistolenartig ausgestaltet ist. Ein Bediener kann das Maschinengehäuse 11 und somit die Hand-Werkzeugmaschine 10 an einem Handgriffabschnitt 12 ergreifen, der von einem Motorabschnitt 13 des Maschinengehäuses 11 absteht. An einem Fußbereich oder von dem Motorabschnitt 13 entfernten freien Endbereich des Handgriffabschnittes 12 ist eine Energiespeicher-Schnittstelle 14 vorgesehen, an die ein Energiespeicher 25, zum Beispiel ein Akku-Pack, angebracht werden kann. Mithin ist also die Hand-Werkzeugmaschine 10 autark und kabellos betreibbar, wobei es darauf nicht ankommt. Ohne weiteres wäre auch eine Hand-Werkzeugmaschine mit einem Netzanschluss 14B für ein Wechselstromnetz, insbesondere ein Anschlusskabel mit einem Stecker und/oder eine Buchse für ein Anschlusskabel, insbesondere ein Netzkabel, oder eine Hand-Werkzeugmaschine mit Energiespeicher-Schnittstelle und Netzanschluss, möglich.

Die Energiespeicher-Schnittstelle 14 versorgt eine Bestromungseinrichtung 15 mit elektrischer Energie. Die Bestromungseinrichtung 15 ist anhand eines Schalters 16, der am Handgriffabschnitt 12 vorzugsweise angeordnet ist, betätigbar, um einen Antriebsmotor 17, der im Motorabschnitt 13 des Maschinengehäuses 11aufgenommen ist, zu bestromen, insbesondere dessen Drehzahl und/oder Drehmoment einzustellen.

Der Antriebsmotor 17 weist eine Motorwelle 18 auf, die sich in Längsrichtung des Motorabschnittes 13 erstreckt. Die Motorwelle 18 ist an Motorlagern 19 drehbar gelagert. Der Antriebsmotor 17 weist beispielsweise eine Erregerspulenanordnung 20, die von der Motorwelle 18 durchsetzt wird und der ein Rotor, insbesondere ein Permanentmagnet-Rotor, ein Kurzschlussläufer oder dergleichen, drehbar aufgenommen ist.

Der Antriebsmotor 17 ist in dem Maschinengehäuse 11 ortsfest angeordnet. Seine Motorwelle 18 erstreckt sich von einer Rückwand 21 in Richtung einer Stirnseite 22 des Motorabschnittes 13. An der von dem Handgriffabschnitt 12 abgewandten Seite des Motorabschnittes 13 ist eine Oberseitenwand 23 des Maschinengehäuses 11 vorgesehen. Zwischen dem Handgriffabschnitt 12 und dem Motorabschnitt 13 ist vorzugsweise ein Drehrichtungsumschalter 24 angeordnet, mit dem die Drehrichtung des Antriebsmotors 17 einstellbar bzw. umschaltbar ist.

Vorzugsweise ist an einem freien Endbereich oder einer sonstigen Stelle des Maschinengehäuses 11 ein Hakenelement 26 vorgesehen, um die Hand-Werkzeugmaschine 10 aufzuhängen, beispielsweise am Gürtel eines Nutzers.

Ein Motorabtrieb 27 des Antriebsmotors 17 treibt ein Getriebe 40 der Hand-Werkzeugmaschine 10 an.

Das Getriebe 40 weist einen z.B. als Antriebsrad und/oder Antriebswelle ausgestalteten oder ein Antriebsrad und/oder eine Antriebswelle aufweisenden Getriebeantrieb 41 auf, welcher mit dem Motorabtrieb 27 drehfest verbunden ist.

Ein Getriebeabtrieb 42 des Getriebes 40 treibt beispielsweise eine Werkzeugwelle 28 an, die vor die Stirnseite 22 des Maschinengehäuses 11 vorsteht.

Die Werkzeugwelle 28 weist beispielsweise eine Werkzeugaufnahme 29 für ein Arbeitswerkzeug 30, beispielsweise ein Bohrwerkzeug, Schraubwerkzeug oder dergleichen, auf. Die Werkzeugwelle 28 ist beispielsweise anhand eines Lagers 31 am Maschinengehäuse 11 drehbar gelagert. Die Werkzeugwelle 28 kann aber auch unmittelbar durch das Getriebe 40 oder an dem Getriebe 40 gelagert sein, beispielsweise anhand eines Lagers 43.

Weiterhin ist es vorteilhaft, wenn bei einer erfindungsgemäßen Hand-Werkzeugmaschine ein Schlagwerk, beispielsweise ein Axial-Schlagwerk und/oder Rotationsschlagwerk am Abtrieb des Getriebes angeordnet ist. Ohne weiteres kann ein derartiges Schlagwerk auch in das Getriebe integriert sein. Beim konkreten Ausführungsbeispiel ist ein Schlagwerk 200 vorgesehen.

Ein Schlagkörper 201 des Schlagwerks 200 ist beispielsweise von der Werkzeugwelle 28 gebildet oder fest mit dieser verbunden. Der Schlagkörper 201 ist beispielsweise ein Ring, der von der Werkzeugwelle 28 durchdrungen und mit der Werkzeugwelle 28 verdrehfest und axial fest verbunden ist.

Der Schlagkörper 201 ist durch eine Feder 202 in einer Richtung SW1 nach vorn, d. h. zur Werkzeugaufnahme 29 hin, kraftbeaufschlagt.

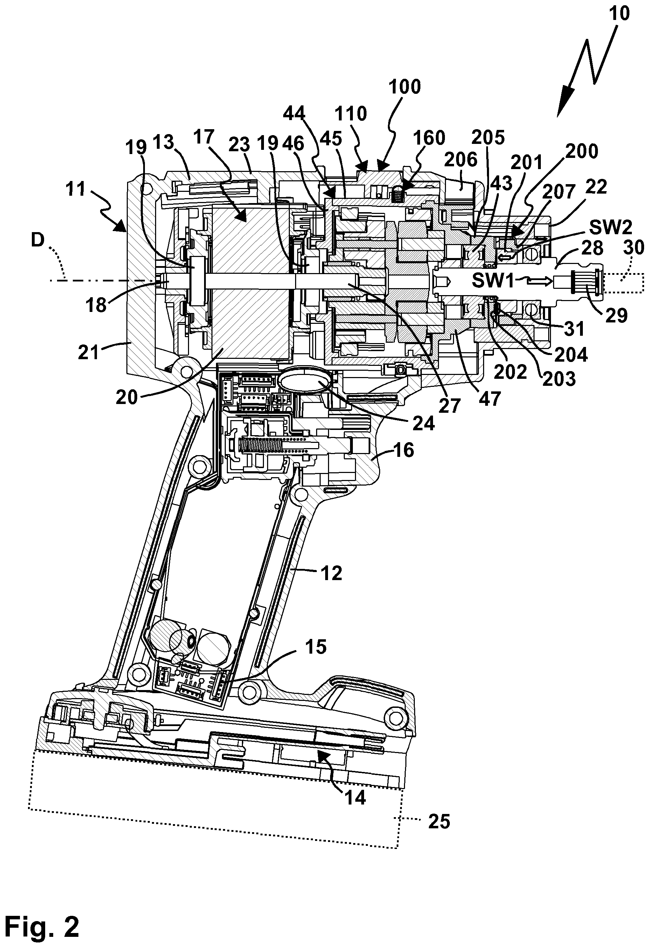

Das Schlagwerk 200 ist zwischen einem beschriebenen Schlagbetrieb und einem nicht schlagenden Betrieb umschaltbar, beispielsweise durch eine Betätigung eines Betätigungselements 206, das vom Bediener ergreifbar ist. Das Betätigungselement 206 umfasst beispielsweise einen Schieber oder ein Drehelement. Das Betätigungselement 206 kann einen Stellkörper 207 zwischen der in Figur 2 dargestellten und dem Schlagbetrieb zugeordneten Schaltstellung, in der die Werkzeugwelle 28 einschließlich des Lagers 31 bezüglich der Drehachse D linear verschieblich ist, also ein Längsspiel aufweist, und somit Verzahnungen 203, 204 in Eingriff miteinander gelangen können, und einer weiteren, in der Zeichnung nicht dargestellten Schaltstellung verstellt werden, die einen nicht schlagenden Betrieb darstellt und bei der die Verzahnungen 203, 204 außer Eingriff gehalten werden. Das Lager 31 ist an dem Stellkörper 207 gehalten. Die Werkzeugwelle 28 ist bezüglich der Drehachse D am Lager 43 verschieblich gelagert.

Die Verzahnung 203 ist an einem Widerlagerkörper 205 angeordnet, der zwischen dem Lager 43 und dem Schlagkörper 201 bezüglich des Maschinengehäuses 11 ortsfest (drehfest und axial verschiebefest) angeordnet ist. Die Verzahnung 203 liegt der Verzahnung 204 gegenüber, die am Schlagkörper 201 angeordnet ist. Die Verzahnungen 203, 204 sind an den jeweiligen Stirnseiten des Widerlagerkörpers 205 und des Schlagkörpers 201 angeordnet. Die Verzahnungen 203, 204 sind vorzugsweise Schrägverzahnungen. Die Verzahnungen 203, 204 erstrecken sich vorzugsweise ringförmig oder teilringförmig um die Drehachse D der Werkzeugwelle 28.

Bei einem Druck in einer Kraftrichtung SW2 auf die Werkzeugwelle 28, beispielsweise wenn das Arbeitswerkzeug 30 durch eine Schraube oder ein Werkstück zum Maschinengehäuse 11 hin belastet wird, gleiten die Verzahnungen 203, 204 aneinander entlang, wobei sie den Schlagkörper 201 in der Kraftrichtung SW2 verstellen, sodass eine Feder 202 mit einer Kraftrichtung SW1 beaufschlagt, gespannt wird. Wenn die Verzahnungen 203, 204 von einem Zahnpaar in ein nächstes Zahnpaar weiter gedreht sind, können sie schlagartig unter Belastung durch die Feder 202 ineinander eintauchen, sodass ein Schlag mit der Kraftrichtung SW 1 auf die Werkzeugwelle 28 und mithin die Werkzeugaufnahme 29 ausgeführt wird.

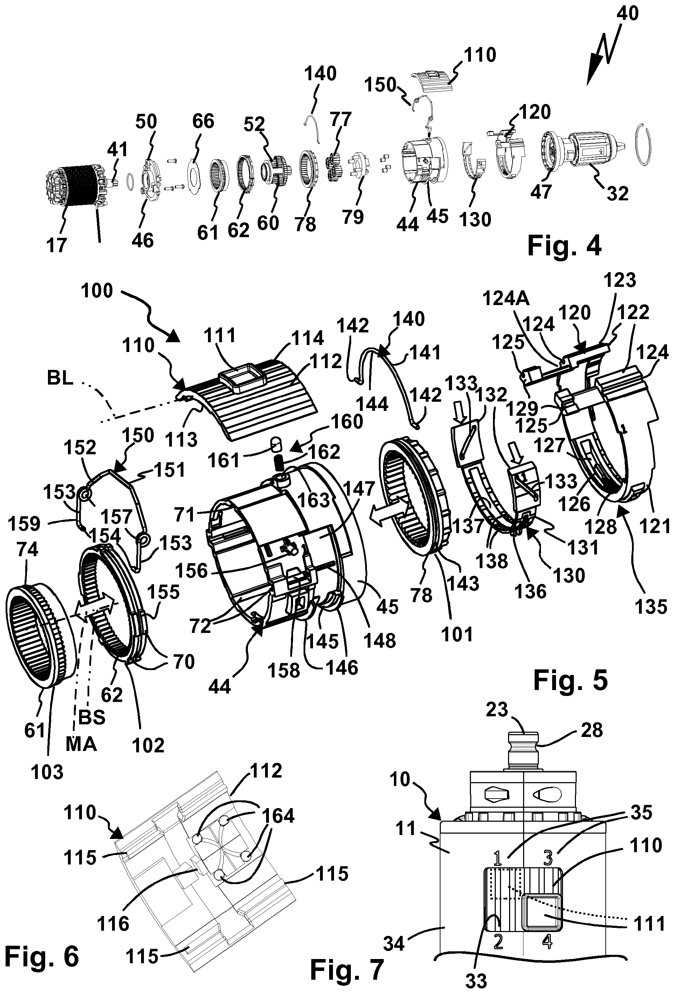

Ein in Figur 4 nur teilweise angedeutetes Ausführungsbeispiel sieht anstelle der Werkzeugwelle 28 ein Aufnahmefutter 32, beispielsweise ein Bohrfutter, vor, welches zum Halten beispielsweise des Arbeitswerkzeugs 30 geeignet ist.

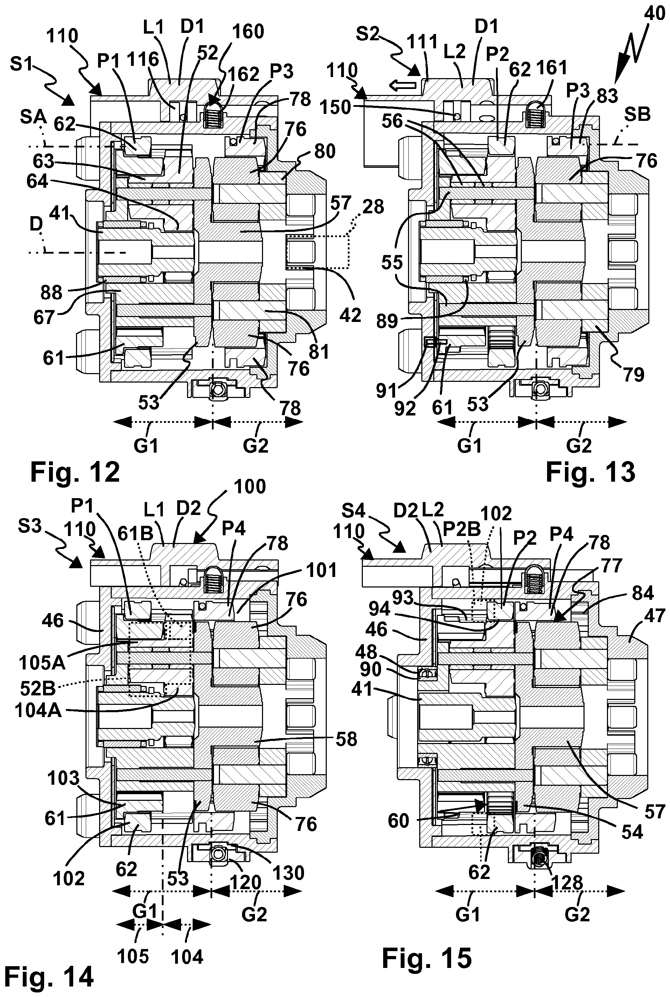

Das Getriebe 40 ist ein Vierganggetriebe. Das Getriebe 40 ist also zwischen vier Gängen oder Schaltstellungen S1, S2, S3 und S4 schaltbar, die in den Figuren 12, 13, 14 und 15 dargestellt sind.

Das Getriebe ist in einem Getriebegehäuse 44 aufgenommen. Das Getriebegehäuse 44 weist eine Umfangswand 45 auf, die einen im Wesentlichen zylindrischen Innenraum begrenzt, indem die Getriebekomponenten, Ritzel und dergleichen, des Getriebes 40 im Wesentlichen aufgenommen sind. Stirnseitig ist das Getriebegehäuse 44 durch Stirnwände 46, 47, beispielsweise Deckel, abgedeckt. Die Stirnwände 46, 47 weisen Durchtrittsöffnungen 48 auf, durch die hindurch der Motorabtrieb 27 mit dem Getriebeantrieb 41 und die Werkzeugwelle 28 oder das Aufnahmefutter 32 mit dem Getriebeabtrieb 42 des Getriebes 40 verbindbar sind. Die Durchtrittsöffnungen 48 sind beispielsweise Durchstecköffnungen.

Das Getriebegehäuse 44 ist drehfest im Maschinengehäuse 11 der Hand-Werkzeugmaschine 10 aufgenommen, wofür beispielsweise eine Verzahnung 49 und/oder ein Verdrehsicherungsvorsprung 49A an der Stirnwand 47, die der Werkzeugaufnahme 29 zugewandt ist, und/oder eine in der Art einer Verdrehsicherung ausgestaltete Umfangskontur 50 an der Stirnwand 46 vorgesehen sind, die dem Antriebsmotor 17 zugewandt ist.

Mithin hausen also das sozusagen ein Grund-Getriebegehäuse bildende Getriebegehäuse 44 (die Umfangswand 45) sowie die Deckel bildenden Stirnwände 46, 47 die nachfolgend erläuterten Getriebekomponenten des Getriebes 40 im Wesentlichen dicht ein, wofür Dichtelemente, insbesondere Textildichtungen, Kunststoffdichtungen, O-Ringe, Labyrinthdichtungen etc. vorgesehen sein können.

Das Getriebe 40 weist eine erste Getriebestufe G1 sowie eine zweite Getriebestufe G2 auf. Die erste Getriebestufe G1 bildet eine Eingangsgetriebestufe und ist durch den Getriebeantrieb 41 antreibbar. Die zweite Getriebestufe G2 bildet eine Abtriebsgetriebestufe und treibt den Getriebeabtrieb 42 des Getriebes 40 an.

Die Getriebestufen G1 und G2 sind Planetengetriebestufen. Insgesamt ist das Getriebe 40 als Planetengetriebe ausgestaltet.

Die Getriebestufe G1 umfasst ein Sonnenrad 51, welches an dem Antriebsrad oder Getriebeantrieb 41 angeordnet oder mit dem Getriebeantrieb 41 einstückig ist. Das Sonnenrad 51 kämmt mit Planetenrädern 52, die an einem Steg oder Planetenradträger 53 drehbar gelagert sind. Beispielsweise sind die Planetenräder 52 an vor einen Trägerkörper 54 vorstehenden Achselementen 55 drehbar gelagert. Die Planetenräder 52 können an den Achselementen 55 direkt gelagert sein oder wie beim Ausführungsbeispiel bevorzugt anhand von Wälzlagern 56, insbesondere Kugellagern oder Nadellagern, was die Drehbarkeit bzw. die Lagerung verbessert. Von dem Trägerkörper 54 stehen an einander entgegengesetzten Seiten einerseits die Achselemente 55, und andererseits ein Abtrieb 57 ab, der ein Sonnenrad 58 für die zweite Getriebestufe G2 bildet. An einem radialen Außenumfang des Planetenradträgers 53 oder Trägerkörpers 54 ist eine Verzahnung 59 vorgesehen.

Die Planetenräder 52 bilden einen Planetenradsatz 60, dem ein erstes Hohlrad 61 und ein zweites Hohlrad 62 zugeordnet sind.

Die Planetenräder 52 sind sozusagen Stufen-Planetenräder. Die Planetenräder 52 haben Wälzumfänge 63, 64 mit unterschiedlichen Durchmessern, die den ersten und zweiten Hohlrädern 61, 62 zugeordnet sind bzw. mit diesen kämmen, wenn eine entsprechende Schaltstellung des Getriebes 40 eingestellt ist.

Das Hohlrad 61 ist in dem Getriebegehäuse 44 drehbar, jedoch axial unverschieblich gelagert.

Beim Ausführungsbeispiel ist das Hohlrad 61 sandwichartig zwischen die Stirnwand 46 und den Stufen 65 der Planetenräder 52 aufgenommen.

Das Hohlrad 61 stützt sich z.B. mit seinen einander entgegengesetzten Stirnseiten einerseits direkt oder indirekt an der Stirnwand 46 ab, entgegengesetzt dazu, an der anderen Stirnseite, an einer zwischen den Wälzumfängen 63, 64 vorgesehenen Stufe 65 ab. Zwischen dem Hohlrad 61 und der Stirnwand 46 ist vorzugsweise eine Lagerplatte 66 vorgesehen, die im Innenraum der Umfangswand 45 drehbar oder vorzugsweise drehfest, wie in Figur 4 durch entsprechende Außenumfangskonturen bzw. Dreh-Formschlusskonturen angedeutet, aufgenommen ist. Es ist auch möglich, dass das Hohlrad 61 durch andere Maßnahmen unverschieblich bezüglich einer Drehachse D des Getriebeabtriebs 42 des Getriebes 40 gehalten wird, beispielsweise durch mit einem später noch im Detail beschriebenen Stützkörper 61 in Eingriff stehende Ringkonturen. So kann beispielsweise ein Ringvorsprung radial nach außen vor den Stützkörper 61 vorstehen und in eine Ringnut am Innenumfang des Hohlrads 61 eingreifen.

Im Sinne einer Stabilisierung bzw. eines mechanisch belastbaren Aufbaus ist es auch, dass die Achselemente 55 an ihren freien, von dem Trägerkörper 54 abgewandten Seiten an einem Stützkörper 67 abgestützt sind. Der Stützkörper 67 weist Aufnahmen 68 für mindestens eines der Achselemente 55 auf. Zudem sind Stützvorsprünge 69 vorgesehen, die sozusagen Aufnahmekammern oder Aufnahmeräume für die Planetenräder 52 begrenzen. Es ist möglich, jedoch nicht unbedingt erforderlich, dass ein Teil der Achselemente 55, insbesondere keine Planetenräder tragende Achselemente 55, in die Stützvorsprünge 69 formschlüssig eingreifen, wofür die Stützvorsprünge 69 beispielsweise Aufnahme 69A aufweisen. Somit sind die Planetenräder 52 sozusagen zwischen dem Planetenradträger 53 und dem Stützkörper 57 sandwichartig aufgenommen und am Planetenradträger 53, nämlich dessen Achselementen 55 drehbar gelagert.

Es versteht sich, dass der Stützkörper 67 und der Trägerkörper 54 auch einstückig sein können. Weiterhin stellt der Stützkörper 67 eine Option dar, d. h. es würde an sich auch der Trägerkörper 54 ausreichen, um die Planetenräder 52 drehbar zu lagern, sodass der Stützkörper 67 in diesem Fall nicht vorhanden ist.

Während das erste Hohlrad 61 im Getriebegehäuse 44 drehbar, jedoch unverschieblich gelagert ist, ist das zweite Hohlrad 62 im Getriebegehäuse 40 bezüglich einer Stellachse SA verschieblich gelagert, jedoch unverdrehbar gelagert. Am radialen Außenumfang des zweiten Hohlrads 62 sind Verdrehsicherungsvorsprünge 70 vorgesehen, die in Verdrehsicherungsaufnahmen 71 des Getriebegehäuses 44 eingreifen. Die Verdrehsicherungsvorsprünge 70 sind beispielsweise in der Art von Nutensteinen, Kulissenfolgern oder dergleichen ausgestaltet. Sie greifen in die Verdrehsicherungsaufnahmen 71 ein. Die Verdrehsicherungsaufnahmen 71 sind beispielsweise als Längsnuten 72 ausgestaltet, die parallel zur Stellachse SA verlaufen. Die Verdrehsicherungsaufnahmen 71 oder Längsnuten 72 erstrecken sich beispielsweise an der Innenseite oder am Innenumfang der Umfangswand 45. Die Verdrehsicherungsvorsprünge 70 und/oder die Verdrehsicherungsaufnahmen 71 können unterschiedliche Querschnittskonturen aufweisen, beispielsweise in Umfangsrichtung breitere oder schmälere Gestalt haben. Darauf kommt es im Detail nicht an, um die grundsätzliche Funktionalität zu gewährleisten, dass nämlich das Hohlrad 62 entlang der Stellachse SA oder parallel zur Stellachse SA am Getriebegehäuse 40 und/oder relativ zum Planetenradsatz 60 verstellbar ist.

In den in Figur 12 und Figur 14 dargestellten Schaltstellung, nämlich der ersten Schaltstellung S1 und der dritten Schaltstellung S3, befindet sich das zweite Hohlrad 62 in einer Stellposition P1 bezüglich der Stellachse SA, in der das zweite Hohlrad 62 das erste Hohlrad 61 drehfest im Getriebegehäuse 40 hält, so dass die Planetenräder 52 mit ihren kleineren Wälzumfängen 63 mit einer Innenverzahnung 75 des ersten Hohlrads 61 kämmen und sich an der Innenverzahnung 75 abwälzen. Das zweite Hohlrad 62, welches ja verdrehfest im Getriebegehäuse 64 aufgenommen ist, hat Verdrehsicherungskonturen an seinem Innenumfang zum verdrehfesten Halten des ersten Hohlrads 61, welches entsprechende Komplementär-Drehformschlusskonturen an seinem Außenumfang aufweist. Diese Drehformschlusskonturen und Komplementär-Drehformschlusskonturen werden von einer Innenverzahnung 73 des zweiten Hohlrades 62 sowie einer Außenverzahnung 74 des ersten Hohlrads 61 bereitgestellt, die formschlüssig ineinandergreifen können. Mithin hat also die Innenverzahnung 73 des zweiten Hohlrads 62 einerseits die Funktion, dass sich die Planetenräder 52 an ihr abwälzen können, andererseits die Funktion, dass erste Hohlrad 61 verdrehfest bezüglich des Getriebegehäuses 44 und mithin auch des Maschinengehäuses 11 der Hand-Werkzeugmaschine 10 zu halten.

Nimmt nämlich das zweite Hohlrad 62 die in den Figuren 13 und 15 dargestellte Stellposition P2 bezüglich der Stellachse SA ein, ist das erste Hohlrad 61 bezüglich einer Verdrehung freigegeben. Mithin können also die Planetenräder 52 bzw. der Planetenradsatz 60 das erste Hohlrad 61 in dreh-mitnehmen und erfahren durch das Hohlrad 61 keinen oder allenfalls einen geringen Widerstand. In dieser Situation wälzen sich die Planetenräder 52 mit ihren größeren Wälzumfängen 64 am Innenumfang, mithin der Innenverzahnung 73, des zweiten Hohlrads 62 ab, was für die in den Figuren 13 und 15 dargestellten Schaltstellung, der zweiten Schaltstellung S2 und der vierten Schaltstellung S4, des Getriebes 40 wesentlich ist. Der Abtrieb 57 der ersten Getriebestufe G1 dreht in der zweiten und vierten Schaltstellung mit einer höheren Drehzahl und einem kleineren Drehmoment als in der ersten und dritten Schaltstellung S1, S3.

Die Getriebestufe G2 umfasst Planetenräder 76 eines Planetenradsatzes 77, die in Eingriff einerseits mit dem Sonnenrad 58, also dem Abtrieb 57 der ersten Getriebestufe G1, andererseits mit einem dritten Hohlrad 78 sind. Das dritte Hohlrad 78 ist in dem Getriebegehäuse 44 verschieblich entlang einer Stellachse SB aufgenommen. Die Stellachse SA kann mit der Stellachse SB koaxial sein oder parallel dazu. Die Stellachsen SA, SB sind in den Figuren 12 und 13 exemplarisch eingezeichnet.

Die Stellachsen SA, SB können auch beispielsweise mit einer Drehachse D des Getriebes 40 und/oder des Getriebeantriebs 41 und/oder des Getriebeabtriebs 42 koaxial sein oder zusammenfallen. Die Drehachse D des Getriebes 40 ist gleichzeitig die Drehachse des Antriebsmotors 17, sodass letztlich das Getriebe 40, der Antriebsmotor 17 und der Getriebeabtrieb 42 koaxial sind. Auch die Werkzeugaufnahme 23 dreht um die Drehachse D.

Die Planetenräder 76 sind an einem Planetenradträger 79, also einem Steg, drehbar gelagert. Der Planetenradträger 79 weist einen Trägerkörper 80 auf, von dem Achselemente 81 einerseits und der Getriebeabtrieb 42 andererseits an einander entgegengesetzten Seiten angeordnet sind. Die Achselemente 81 stehen zu dem Sonnenrad 58, mithin also dem Abtrieb 57 der ersten Getriebestufe G1 vor, so dass die an den Achselementen 81 drehbar gelagerten oder durch die Achselemente 81 drehbar gelagerten Planetenräder 76 mit dem Abtrieb 57 in Eingriff sind bzw. durch diesen antreibbar sind. Die Planetenräder 76 können direkt an den Achselementen 81 drehbar gelagert sein oder indirekt, beispielsweise über nicht dargestellte Wälzlager, insbesondere Nadellager.

Der Planetenradsatz 77 umfasst beispielsweise vier Planetenräder 76, während der Planetenradsatz 60 drei Planetenräder 52 umfasst. Diese Anzahlen sind aber nicht einschränkend zu verstehen. So kann ein Planetenradsatz durchaus auch zwei Planetenräder, fünf Planetenräder oder eine andere Anzahl von Planetenrädern aufweisen.

Das Hohlrad 78 weist an seinem radialen Außenumfang Verdrehsicherungsvorsprünge 83 auf, die in Eingriff mit Verdrehsicherungsaufnahmen 84 des Getriebegehäuses 44, beispielsweise am Deckel oder der Stirnwand 47, gebracht werden können. In den Figuren 12 und 13 dargestellten Schaltstellungen S1 und S2 des Getriebes 40 nimmt das dritte Hohlrad 78 eine Stellposition P3 bezüglich der Stellachse SB ein, in der das dritte Hohlrad 78 bezüglich der Drehachse D oder des Getriebegehäuses 44 verdrehfest festgelegt sind. Dann greifen die Drehsicherungsvorsprünge 83 in die Verdrehsicherungsaufnahmen 84 ein.

In einer Stellposition P4 bezüglich der Stellachse SB hingegen kommen die Verdrehsicherungsvorsprünge 83 des dritten Hohlrads 78 von den Verdrehsicherungsaufnahmen 84 frei bzw. sind abseits davon angeordnet, so dass das Hohlrad 78 um die Drehachse D drehen kann.

In der Stellposition P3, der verdrehfest festgelegten Position des dritten Hohlrads 78, wälzen die Planetenräder 78 mit ihren Außenumfängen an einer Innenverzahnung 85 des Hohlrads 78 ab. Dabei bewirkt die zweite Getriebestufe G2 eine Drehzahlreduktion und somit Drehmomenterhöhung von seiner Eingangsseite zu seiner Ausgangsseite bzw. von seinem Antrieb zum Getriebeabtrieb 42 hin.

In der Stellposition P4 des Hohlrads 78 hingegen sind zwar weiterhin die Räder 76 in Eingriff mit der Innenverzahnung 85. Das Hohlrad 78 ist aber weiterhin mit seiner Innenverzahnung 85 in Eingriff mit der außenseitigen bzw. radial außenseitigen Verzahnung 59 des Planetenradträgers 53. Somit ist das Hohlrad 78 bezüglich des Planetenradträgers 73 verdrehfest festgelegt. Zudem sind die Planetenräder 76 zwischen der Verzahnung des Sonnenrads 78 und der Innenverzahnung 85 des dritten Hohlrads 78 verdrehfest gelagert. Mithin hat also die zweite Getriebestufe D2 in dieser Situation ein Drehzahlverhältnis von i = 1 zwischen seiner Eingangsseite und seiner Ausgangsseite, bewirkt also weder eine Drehzahlveränderung noch eine Drehmomentveränderung.

Der Getriebeabtrieb 42 ist am Planetenradträger 79 vorgesehen. Der Planetenradträger 79 weist vom Trägerkörper 80 abstehende Stützvorsprünge 86 auf, zwischen denen beispielsweise die Werkzeugwelle 28 anordenbar ist oder von denen die Werkzeugwelle 28 gehalten werden kann. Beispielsweise ist die Werkzeugwelle 28 von Stützelementen 87 gehalten, die sich ihrerseits wiederum an den Stützvorsprüngen 86 abstützen.

Der Getriebeantrieb 41, den man auch als Antriebswelle bezeichnen kann, ist an einem Drehlager 88, insbesondere einem Wälzlager, in der in den Figuren 12 bis 14 dargestellten Ausführungsform drehbar gelagert. Das Drehlager 88 stützt sich an einem Innenumfang einer Durchtrittsöffnung des Stützkörpers 67 ab und ist beispielsweise durch einen Sprengring 89 bezüglich der Drehachse D axial gesichert.

Bei dem in Figur 15 dargestellten Lagerkonzept hingegen ist der Stützkörper 67 anhand eines Drehlagers 90 am Deckel bzw. der Stirnwand 46 des Getriebegehäuses 44 drehbar gelagert. Das Drehlager 90, beispielsweise ein Kugellager, Nadellager oder sonstiges Wälzlager (ein Gleitlager ist auch möglich), ist beispielsweise in der Durchtrittsöffnung 48 angeordnet und abgestützt.

Eine Betätigungseinrichtung 100 dient zum Schalten und Betätigen des Getriebes 40. Mit der Betätigungseinrichtung 100 kann das Hohlrad 78 linear zwischen den Stellpositionen P3, P4 verstellt werden. Das Hohlrad 78 bildet ein erstes Schalt-Getriebeelement 101. Das Hohlrad 62 kann ebenfalls durch die Betätigungseinrichtung 100 linear zwischen den Stellpositionen P1 und P2 verstellt werden und ist dazu mit der Betätigungseinrichtung 100 gekoppelt. Das Hohlrad 62 bildet ein zweites Schalt-Getriebeelement 102.

Ein drittes Schalt-Getriebeelement 103 wird nicht unmittelbar durch die Betätigungseinrichtung 100 geschaltet, sondern durch das sozusagen zwischengeschaltete Schalt-Getriebeelement 102. Das Schalt-Getriebeelement 103 wird durch das Hohlrad 78 bereitgestellt.

Der Planetenradsatz 60 bildet dabei einen Bestandteil einer ersten und einer zweiten Getrieberadanordnung 104, 105, siehe Figur 14. Die erste Getrieberadanordnung 104 ist dem ersten Schalt-Getriebeelement 102 zugeordnet und umfasst beispielsweise die Wälzumfänge 64 der Planetenräder 52. Die zweite Getrieberadanordnung 105 ist sozusagen fest mit der ersten Getrieberadanordnung 104 zumindest in Bezug auf die Planetenräder 52 gekoppelt oder verbunden. Jedes Planetenrad 52 hat nämlich verschiedene Wälzumfänge 63, 64 und bildet somit sozusagen zwei Teil-Planetenräder. Das Teil-Planetenrad mit dem Wälzumfang 63 ist dem Hohlrad 61 und somit dem Schalt-Getriebeelement 103 und der Getrieberadanordnung 105 als ein Getrieberad 105A zugeordnet. Das Teil-Planetenrad ist mit dem Wälzumfang 64 dem Hohlrad 62 und somit dem Schalt-Getriebeelement 102 und der Getrieberadanordnung 104 als ein Getrieberad 104A zugeordnet. Die Teil-Planetenräder sind aufgrund der Ausgestaltung als Stufenplanetenräder einstückig oder fest miteinander gekoppelt. Man kann sich aber leicht vorstellen, dass die Teil-Planetenräder auch individuelle Planetenräder sein können, die drehfest miteinander verbunden sind oder in einer anderen Ausführungsform relativ zueinander verdrehbar sind.

Das Schalt-Getriebeelement 102 wirkt einerseits als ein aktives Schaltelement in Bezug auf die Getrieberadanordnung 104, indem es nämlich in der Stellposition P2 direkt in Eingriff mit den größeren Wälzumfängen 64 der Planetenräder 52 ist. In der Stellposition P1 hingegen ist das Hohlrad 62 von den Planetenrädern 52 weg verstellt, d.h. die Innenverzahnung 73 kämmt nicht mehr mit den Wälzumfängen 64.

In der Stellposition P1 ist das Hohlrad 62 jedoch ein Schaltaktor für das andere Hohlrad 61, das durch das Hohlrad 62 oder das Schalt-Getriebeelement 102 bezüglich des eine Getriebe-Haltestruktur 44A bildenden Getriebegehäuses 44 anhand der ineinandergreifenden Verzahnungen, nämlich der Außenverzahnung 74 und somit einer Verdrehsicherungskontur 93 und der Innenverzahnung 73 und somit einer Formschluss-Gegenkontur 94, verdrehfest gehalten wird. Mithin wird also das Schalt-Getriebeelement 103 sozusagen durch das Schalt-Getriebeelement 102 geschaltet.

An dieser Stelle sei erwähnt, dass die Verzahnungen zwischen den Schalt-Getriebeelementen 102, 103 oder Hohlrädern 61, 62 nicht unbedingt notwendig sind. Beispielsweise kann das Schalt-Getriebeelement 102 das Schalt-Getriebeelement 103 lediglich in Richtung einer gehäusefesten oder ortsfesten Formschluss-Gegenkontur 91, insbesondere an der Stirnwand 46, verstellen, sodass eine Verdrehsicherungskontur 92 des Schalt-Getriebeelements 103 mit der Formschluss-Gegenkontur 91 in einen das Schalt-Getriebeelement 103 bezüglich der Getriebe-Haltestruktur, also des Getriebegehäuses 44, verdrehsicher haltenden Eingriff verstellen kann (Figur 13). Die Verdrehsicherungskontur 92 ist beispielsweise ein parallel zur Stellachse SA verlaufender Formschlussvorsprung, die Formschluss-Gegenkontur 91 eine entsprechende Formschlussaufnahme, beispielsweise ein Sackloch. Vorteilhaft sind aber Verzahnungen als Verdrehsicherungskonturen bzw. Formschluss-Gegenkonturen.

Somit braucht also keine direkte Kopplung zwischen der Betätigungseinrichtung 100 und insbesondere deren Betätigungsglied 110 und dem Schalt-Getriebeelement 103 vorgesehen sein, um die Getrieberadanordnung 105 zu schalten. Der Aufbau der Betätigungseinrichtung 100 wird dadurch einfacher. Das Getriebe 40 baut kürzer. Zudem ergibt sich eine einfache und bequeme Handhabung der Betätigungseinrichtung 100, was nachfolgend noch deutlicher wird.

Die Betätigungseinrichtung 100 umfasst das Betätigungsglied 110 mit einer Betätigungshandhabe 111. Die Betätigungshandhabe 111 ist in einer Öffnung 33 an einer Oberseitenwand 34 des Gehäuses 11 der Hand-Werkzeugmaschine 10 angeordnet und somit für einen Bediener bequem zugänglich.

Am Gehäuse 11, beispielsweise an den Randbereichen der Öffnung 33, können Zahlen 1, 2, 3 und 4 oder sonstige Markierungen 35 angeordnet sein, die den jeweiligen Schaltstellungen S1, S2, S3 und S4 zugeordnet sind. Die Betätigungshandhabe 111 ist innerhalb der Öffnung 33 verschieblich und/oder verschwenkbar. Die Betätigungshandhabe 111 kann in den Bereich einer jeweiligen Markierung 35, vorliegend also in jeweilige Eckbereiche der Öffnung 33 verstellt werden, um die Schaltstellungen S1, S2, S3 und S4 einzustellen. Ein unmittelbares Schalten oder Stellen der Betätigungshandhabe 111 von jeder der Schaltstellungen S1, S2, S3 und S4 in jede andere der Schaltstellungen S1, S2, S3 und S4, ohne eine Zwischen-Schaltstellung einzustellen, ist möglich. So kann das Getriebe 40 beispielsweise unmittelbar von der Schaltstellung S1 (Betätigungshandhabe 111 ist in Figur 7 gestrichelt dargestellt) in die Schaltstellung S4 (Betätigungshandhabe 111 ist in Figur 7 in durchgezogenen Linien dargestellt) verstellt werden, ohne eine der dazwischenliegenden Zwischen-Schaltstellungen S2 oder S3 anzufahren.

Die Betätigungshandhabe 110 ist an einer Oberseite 114 eines insbesondere tonnenförmigen oder gewölbten Wandkörpers 112 vorgesehen, dessen Unterseite 113 dem Getriebegehäuse 44 zugewandt ist. Eine Krümmung des Wandkörpers 112 entspricht in etwa einer Krümmung der Umfangswand 45 des Getriebegehäuses 44, so dass der Wandkörper 112 in der Art eines Deckels oder Deckelteils oder Wandabschnitts an der Umfangswand 45 entlang beweglich ist.

Das Betätigungsglied 110 ist an einem Mitnahmering 120 angeordnet, der seinerseits um eine Schwenkachse MA, die vorzugsweise mit der Drehachse D des Getriebeabtriebs 42 zusammenfällt, schwenkbar oder drehbar am Getriebegehäuse 44, insbesondere am Außenumfang der Umfangswand 45 gelagert ist. Dadurch kann das Betätigungsglied 110 um die Schwenkachse MA und somit eine Betätigungsschwenkachse BS zwischen Betätigungsstellungen D1 und D2 schwenken.

Der Mitnahmering 120 weist einen Ringkörper 121 auf, der in einer Ringführung 145 des Getriebegehäuses 44 verdrehbar gelagert ist. Der Ringkörper 121 wird an seinen Schmalseiten beispielsweise von Umfangsvorsprüngen 146 geführt, die vor die Umfangswand 45 vorstehen.

An freien Längsendbereichen 122 des Mitnahmerings 120 ist eine Linearführung 123 für das Betätigungsglied 110 vorgesehen, so dass dieses an den Mitnahmering 120 entlang einer Betätigungslängsachse BL zwischen Betätigungsstellungen L1 und L2 verschieblich gelagert ist.

Die Linearführung 123 umfasst direkt an den Längsendbereichen 122 angeordnete Linearführungsabschnitte 124, die entsprechend dem Winkelabstand zwischen den Längsendbereichen 122 zueinander winkelbeabstandet sind. Mithin ist das Betätigungsglied 110 sozusagen ein Verbindungsglied oder Bindeglied, welches die Längsendbereiche 122 des Mitnahmerings 120 miteinander verbindet.

An der Unterseite 113 des Betätigungsglieds 110 sind Linearführungsvorsprünge 115 vorgesehen, die in die Linearführungsabschnitte 124 eingreifen.

An sich weisen die Längsendbereiche 122 des Mitnahmerings 120 schon eine solche Breite oder Länge in Bezug auf die Betätigungslängsachse BL auf, sodass sie zur Linearführung für das Betätigungsglied 110 prinzipiell ausreichen. Weiterhin kann das Betätigungsglied 110 in Führungsausnehmungen, beispielsweise Nuten, am Außenumfang, beispielsweise Längsseiten und/oder Querseiten, der Aussparung oder Öffnung 33 der Oberseitenwand 34 geführt sein.

Eine zusätzliche und verbesserte Abstützung ist jedoch durch Stützvorsprünge 129 gegeben, die bezüglich der Betätigungslängsachse BL oder der Drehachse D vor die Längsendbereiche 122 des Mitnahmerings 120 vorstehen. An den Stützvorsprüngen 122 sind weitere Linearführungsabschnitte 125 vorgesehen, in die die Linearführungsvorsprünge 115 eingreifen und durch die die Linearführungsvorsprünge 115 bezüglich der Betätigungslängsachse BL geführt sind. Die Linearführungsabschnitte 124, 125 sind beispielsweise Längsnuten, deren Querbreite bezüglich der Betätigungslängsachse BL etwa einer Querbreite der Linearführungsvorsprünge 115 entspricht.

Nun könnte eine Ausführungsform vorsehen, dass an den Längsendbereichen 122 des Mitnahmerings 120 Führungskulissen in der Art der nachfolgend noch erläuterten Führungskulissen 133 vorgesehen sind, mit denen ein erstes Koppelelement 140, welches seinerseits mit dem Schalt-Getriebeelement 101 und somit dem Hohlrad 78 verbunden ist, antreibbar ist.

Die Führungskulissen 133 sind jedoch an einem Übertragungsglied 130 vorgesehen, welches seinerseits bezüglich der Betätigungsschwenkachse BS oder einer Drehachse des Mitnahmerings 120 verdrehbar ist. Das Übertragungsglied 130 weist einen Ringkörper 131 auf, an dessen Längsendbereichen 132 beispielsweise in der Art von Plattenkörpern ausgestaltet. Zwischen den Längsendbereichen ist an dem Ringkörper 131 eine Ringaussparung 137 vorgesehen, also ein Zwischenraum zwischen Ringabschnitten 138, die sich zwischen den Längsendbereichen 132 erstrecken.

Das Übertragungsglied 130 ist in einem Innenraum des Mitnahmerings 120 angeordnet. Vor einen radialen Außenumfang des Ringkörpers 132 steht ein Mitnehmer 136 vor, der mit einem Mitnehmer 126 des Mitnahmerings 120 bewegungsgekoppelt ist. Hier wäre auch eine feste Kopplung möglich. Der Mitnehmer 126 ist jedoch an dem Mitnahmering 120 verschieblich bzw. verschwenkbar gelagert. Der Mitnehmer 1126 ist nämlich in einer Kulisse 127 des Mitnahmerings 120 beweglich gelagert. Die Kulisse 127 erstreckt sich ringförmig am Mitnahmering 120. Sie ist am Ringkörper 121 vorgesehen. Der Mitnehmer 126 steht nach radial innen vor den Ringkörper 121 vor, so dass er in Eingriff mit dem Mitnehmer 136 gelangen kann. Beispielsweise ist eine Steckverbindung zwischen den Mitnehmern 126, 136 vorgesehen. Die Kulisse 127 ist also bogenförmig oder ringförmig und erstreckt sich um die Schwenkachse MA des Mitnahmerings 120, um die der Mitnahmering 120 bezüglich des Getriebegehäuses 44 schwenkt.

Der Mitnehmer 126 ist durch eine Federanordnung 128, beispielsweise eine Schraubenfeder, federbelastet. Wenn also der Mitnahmering 120 um die Schwenkachse MA geschwenkt wird, wird der Mitnehmer 126 mitbewegt, so dass abgestützt über die Federanordnung 128 diese Drehbewegung oder Drehkraft auf das Übertragungsglied 130 übertragen wird, welches die Drehbewegung letztlich in eine Linearbewegung für das Koppelelement 140 und das Schalt-Getriebeelement 101 umwandelt.

Das Koppelelement 140 ist beispielsweise durch einen Federbügel 141 gebildet. Längsenden 142 des Koppelelements 140 stehen vor einem Ringabschnitt des Koppelelements 140 nach radial außen vor und greifen in der Art von Kulissenfolgern in die Führungskulissen 133 ein. Die Führungskulissen 133 sind beispielsweise Schrägkulissen. Am Schalt-Getriebeelement 101 ist radial außen eine Koppelgliedaufnahme 143, beispielsweise eine Ringnut, vorgesehen, in die das Koppelelement 140 eingreift, insbesondere mit dem Ringabschnitt 144. Eine gewisse Federeigenschaft bringen auch die federnden Längsenden 142 des Koppelelements 140 mit, so dass letztlich die Federanordnung 128 auch entfallen könnte. An der Ringführung 145, in die auch der Ringkörper 131 und mithin das Übertragungsglied 130 eingreifen, kann für die Längsendbereiche 132 des Übertragungsglieds 130 eine Vertiefung 147 vorgesehen sein, die eine gewisse Rast-Wirkung darstellt.

Die Längsenden 142 des Koppelelements 140, welches im Innenraum des Getriebegehäuses 44 angeordnet ist, stehen durch Aussparungen oder Längsnuten 72 vor die Umfangswand 45 vor und greifen in die Führungskulissen 133 ein. Wenn also das Betätigungsglied 110 um die Betätigungsschwenkachse BS schwenkt, schwenkt gleichzeitig auch der Mitnahmering 120 um die Schwenkachse MA, wobei diese Schwenkbewegung durch ein Umlenkgetriebe 135, welches unter anderem die Führungskulissen 133 und das Koppelelement 140 und insbesondere dessen Längsenden 142 umfasst, in eine lineare Stellbewegung für das Stellelement 101 zwischen den Stellpositionen P3 und P4 umgelenkt wird.

Die Übertragung der linearen Bewegung des Übertragungsglieds 110 bezüglich der Betätigungslängsachse BL könnte anders als im Ausführungsbeispiel im Prinzip direkt in eine lineare Betätigungsbewegung eines zweiten Koppelelements 150 übertragen werden, welches zwischen dem Betätigungsglied 110 und dem Schalt-Getriebeelement 102 angeordnet ist. Vorliegend ist aber das Koppelelement 150 um eine Schwenkachse S schwenkbar gelagert, sodass eine Linearverstellung des Betätigungsglieds 110 entlang der Betätigungslängsachse BL in eine Richtung in eine Linearverstellung des Stell-Getriebeelements 102 in eine entgegengesetzte Richtung umgelenkt wird.

Das Koppelelement 150 umfasst einen Federbügel 159. Das Koppelelement 150 umfasst einen Betätigungsabschnitt 151, der in eine Führungsaufnahme 116 an der Unterseite 113 des Betätigungsglieds 110 eingreift. Weiterhin ist der Betätigungsabschnitt 151 in einer Aussparung 124A zwischen den Linearführungsabschnitten 124, 125 des Mitnahmerings 120 aufgenommen.

Der Federbügel 159 oder das Koppelelement 150 ist an dem Getriebegehäuse 44 um die Schwenkachse S schwenkbar gelagert. Die Schwenkachse S befindet sich zwischen dem Betätigungsabschnitt 151 und Mitnahmevorsprüngen 154 an freien Endbereichen des Koppelelements 150. Zwischen den Mitnahmevorsprüngen 154 sind Lageraufnahmen 157 an dem Koppelelement 150 ausgebildet, in die Lagerzapfen 156 eingreifen, die nach radial außen vor das Getriebegehäuse 44 oder die Umfangswand 45 vorstehen. Die Lageraufnahmen 157 befinden sich zwischen Betätigungsabschnitten 152 und Mitnahmeabschnitten 153 des Koppelelements 150. Die Betätigungsabschnitte 152, 153 sind sozusagen Hebelarme, die von der Schwenkachse S abstehen.

Die Mitnahmevorsprünge 154, die z.B. dünne Drahtenden sind, greifen in Mitnahmevertiefungen 155 des Schalt-Getriebeelements 102, mithin also des Hohlrads 62, ein. Beispielsweise sind als Mitnahmevertiefungen 155 Bohrungen oder wie beim Ausführungsbeispiel Nuten vorgesehen.

Das zweite Koppelelement 150 erstreckt sich bogenförmig um das Schalt-Getriebeelement 102, ist aber nur im Bereich der Mitnahmevorsprünge 154 in Kontakt mit dem Schalt-Getriebeelement 102. Demgegenüber ist das Koppelelement 140 anhand seines Ringabschnitts 144 ringförmig und über eine größere Länge in Eingriff mit dem Schalt-Getriebeelement 101.

Im Unterschied zum Koppelelement 140 ist das Koppelelement 150 außerhalb des Getriebegehäuses 44 angeordnet. Seine Mitnahmevorsprünge 154 greifen nach radial innen bezüglich der Betätigungsschwenkachse BS oder der Schwenkachse MA vor die Mitnahmeabschnitte 153 vor und durchdringen Aussparungen 158 am Getriebegehäuse 44 oder Umfangswand 45, so dass sie in Eingriff mit den Mitnahmevertiefungen 155 des Hohlrads 62 oder des Schalt-Getriebeelements 102 sind.

Die Betätigungseinrichtung 100 ist zudem durch eine Rastanordnung 160 verrastbar. Die Rastanordnung 160 umfasst ein Rastglied 161, welches in Rastvertiefungen 164 am Betätigungsglied 110, beispielsweise an der Unterseite 113 des Wandkörpers 112, eingreifen können. Das Rastglied 161 ist durch eine Feder 162 in seine in die Rastvertiefungen 164 eingreifende Raststellung federbelastet. Die Feder 162 und vorzugsweise auch das Rastglied 161 sind in einer Aufnahme oder an einer Aufnahme 163 des Getriebegehäuses 44, beispielsweise einer zylindrischen Aufnahme, aufgenommen und/oder geführt. Jede Rastvertiefung 164 ist einer der Schaltstellungen S1, S2, S3 und S4 des Getriebes 40 zugeordnet.

Der Bediener kann das Betätigungsglied 110 in die der jeweiligen Schaltstellungen S1 - S4 zugeordnete Betätigungsposition bezüglich der Betätigungslängsachse BL und der Betätigungsschwenkachse BS bringen, in der zweckmäßigerweise jeweils eine Verrastung möglich ist. Das Betätigungsglied 110 kann beispielsweise in den Betätigungsstellungen L1, D1 zur Einstellung der Schaltstellung S1, in den Betätigungsstellungen L2, D2 zur Einstellung der Schaltstellung S2, in den Betätigungsstellungen L1, D2, zur Einstellung der Schaltstellung S3 und schließlich in den Betätigungsstellungen D2, L2 zur Einstellung der Schaltstellung S4 verrasten und/oder positioniert sein.

Der Mitnahmering 120 folgt Bewegung des Betätigungsglieds 110 um die Betätigungsschwenkachse BS. Die Federanordnung 128 entkoppelt dabei die Betätigungsbewegung von der eigentlichen Stellbewegung.

Aber auch in Bezug auf das Koppelelement 150 ist eine Federung gegeben. Beispielsweise können die Mitnahmeabschnitte 153 bezüglich der Betätigungsabschnitte 151 und/oder 152 federn oder federnd nachgeben. Dies ist einerseits durch die Ausgestaltung des Koppelelements 150 als Federbügel 159 gegeben. Zudem aber auch noch erleichtert oder verbessert dadurch, dass die Lageraufnahme 157 durch eine Windung des Federbügels 159 gebildet ist, so dass die Mitnahmeabschnitte 153 relativ zu den Mitnahmebetätigungsabschnitten 152 bezüglich der Schwenkachse S federnd sind.

In Figur 15 ist angedeutet, dass das Schalt-Getriebeelement 102 auch prinzipiell dazu dienen kann, die Getrieberadanordnungen 104 und 105 drehfest miteinander zu verkuppeln. Beispielsweise ist das Schalt-Getriebeelement 102 in einer Stellposition P2B gleichzeitig in verdrehfest im Eingriff mit beiden Getrieberadanordnungen 104 und 105 und kann innerhalb der Getriebe-Haltestruktur 44 A oder dem Getriebegehäuse 44 drehen. Somit ist das den Schaltaktor bildende Schalt-Getriebeelement 102 gleichzeitig in Eingriff mit beiden Getrieberadanordnungen 104 und 105. Zur Drehfreiheit des Schalt-Getriebeelements 102 kann beispielsweise eine Ringnut oder dergleichen andere Aussparung im Getriebegehäuse 44 vorgesehen sein.

Der Federbügel 159 oder das Koppelelement 150 ist an dem Getriebegehäuse 44 um die Schwenkachse S schwenkbar gelagert, sodass eine jeweilige Schiebe-Betätigung des Betätigungsglieds 110 in einer ersten Richtung in eine entgegengesetzte lineare Bewegung des Schalt-Getriebeelement 102 umgelenkt wird. Es wäre aber möglich, dass beispielsweise das Koppelelement 150 fest mit dem Betätigungsglied 110 gekoppelt ist, sodass die vorgenannte Bewegungsumkehr nicht erfolgt oder anders formuliert die Bewegungsrichtungen des Betätigungsglieds 110, des Koppelelements 150 und des Schalt-Getriebeelements 102 gleichsinnig verlaufen.

Dabei ist es möglich, dass bei den gleichen Einstellpositionen des Betätigungsglieds 110 die gleichen Getriebeabstufungen möglich sind, wie bei der oben beschriebenen Konfiguration, wenn das Getriebe 40 beispielsweise wie folgt und in Figur 14 schematisch angedeutet modifiziert ist. Bei dieser Konfiguration sind beispielsweise die Planetenräder 52 derart am Planetenradträger 53 angeordnet, dass der kleinere Wälzumfang 63 näher beim Trägerkörper 54 als der größere Wälzumfang 64 ist. Dies ist mit einem Planetenrad 52B angedeutet, welches sozusagen um 180° gedreht wie das Planetenrad 52 am Planetenradträger 53 angeordnet ist. Wenn dann das mit dem kleineren Wälzumfang 63 kämmende radial innere Hohlrad 61 ebenfalls näher beim Trägerkörper 54 angeordnet ist (was mit einem Hohlrad 61B in Figur 14 angedeutet ist), sind die mit der linearen Verstellung des Hohlrads 62 zwischen den Stellpositionen P1 und P2 einstellbaren Getriebeübersetzungen genau umgekehrt wie beim oben beschriebenen Ausführungsbeispiel.

## Patentansprüche

1. Hand-Werkzeugmaschine mit einem Antriebsmotor, einem Getriebe und einer Werkzeugaufnahme, wobei ein Motorabtrieb des Antriebsmotors mit einem Getriebeantrieb des Getriebes und ein um eine Drehachse drehbarer Getriebeabtrieb des Getriebes mit der Werkzeugaufnahme drehgekoppelt sind, wobei das Getriebe ein erstes Schalt-Getriebeelement (101) und ein zweites Schalt-Getriebeelement (102) aufweist, die anhand einer Betätigungseinrichtung (100) jeweils zwischen einer ersten Stellposition und einer zweiten Stellposition bezüglich eines Getriebegehäuses linear verstellbar sind, wobei die Betätigungseinrichtung (100) mit den Schalt-Getriebeelementen gekoppelt ist und ein bezüglich eines Maschinengehäuses der Hand-Werkzeugmaschine um eine Betätigungsschwenkachse schwenkbar gelagertes und durch einen Bediener der Hand-Werkzeugmaschine manuell betätigbares Betätigungsglied (110) aufweist, wobei das erste Schalt-Getriebeelement (101) durch eine Schwenkbewegung des Betätigungsglieds (110) um die Betätigungsschwenkachse linear entlang seiner Stellachse anhand eines Umlenkgetriebes (135) verstellbar ist, wobei das Umlenkgetriebe (135) ein sich ringförmig um das Getriebegehäuse erstreckendes und um die Betätigungsschwenkachse drehbar gelagertes Mitnahmeelement (120) umfasst, das mit dem ersten Schalt-Getriebeelement (101) zu dessen Linearverstellung anhand eines ersten Koppelelementes (140) gekoppelt ist, wobei das Betätigungsglied (110) an dem Mitnahmeelement (120) entlang einer Betätigungslängsachse linear verschieblich gelagert ist und mit dem mindestens einen zweiten Schaltgetriebeelement (102) anhand eines zweiten Koppelelementes (150) zu einer linearen Verschiebung des zweiten Schalt-Getriebeelementes (102) gekoppelt ist, **dadurch gekennzeichnet, dass** das Mitnahmeelement (120) ein Mitnahmering (120) ist und dass zwischen dem Mitnahmering (120) und dem ersten Koppelelement (140) ein, insbesondere ringförmiges, durch den Mitnahmering (120) um die Betätigungschwenkachse mitnehmbares Übertragungsglied (130) angeordnet ist, wobei das Übertragungsglied (130) und
der Mitnahmering (120) relativ zueinander beweglich sind und zwischen dem Übertragungsglied (130) und dem Mitnahmering (120) eine durch eine Relativbewegung des Übertragungsglieds (130) und des Mitnahmerings (120) betätigbare Federanordnung (128) zur Federbelastung des ersten Stell-Getriebeelements in mindestens eine Schaltposition angeordnet ist.

2. Hand-Werkzeugmaschine nach einem der vorhergehenden Ansprüche, **dadurch gekennzeichnet, dass** zwischen dem Betätigungsglied (110) und dem ersten Schalt-Getriebeelement (101) und/oder dem zweiten Schalt-Getriebeelement (102) mindestens eine Federanordnung (128) angeordnet ist, wobei vorteilhaft vorgesehen ist, dass die Federanordnung zwischen dem zweiten Schalt-Getriebeelement (102) und dem Betätigungsglied (110) durch das zweite Koppelelement, insbesondere ausschließlich, bereitgestellt ist.

3. Hand-Werkzeugmaschine nach einem der vorhergehenden Ansprüche, **dadurch gekennzeichnet, dass** das erste Koppelelement (140) und/oder das zweite Koppelelement (150) ein Federelement ist oder umfasst.

4. Hand-Werkzeugmaschine nach einem der vorhergehenden Ansprüche, **dadurch gekennzeichnet, dass** das erste Koppelelement (140) und/oder das zweite Koppelelement (150) ein Federbügel (141, 159) ist oder einen Federbügel (141, 159) umfasst, wobei sich der Federbügel (141, 159) ringförmig um das erste Schalt-Getriebeelement (101) oder zweite Schalt-Getriebeelement (102) erstreckt.

5. Hand-Werkzeugmaschine nach einem der vorhergehenden Ansprüche, **dadurch gekennzeichnet, dass** das Betätigungsglied (110) mit dem zweiten Schalt-Getriebeelement (102) ausschließlich durch das zweite Koppelelement (150) und/oder durch ein einziges Bauteil gekoppelt ist.

6. Hand-Werkzeugmaschine nach einem der vorhergehenden Ansprüche, **dadurch gekennzeichnet, dass** an dem Mitnahmering (120) oder einem durch den Mitnahmering (120) um die Betätigungschwenkachse mitnehmbaren Übertragungsglied (130) mindestens eine Führungskulisse, in die das erste Koppelelement (140) eingreift, zur Umlenkung der Bewegung des Betätigungsglieds (110) um die Betätigungschwenkachse in eine Linearbewegung des ersten Stell-Getriebeelements angeordnet ist.

7. Hand-Werkzeugmaschine nach einem der vorhergehenden Ansprüche, **dadurch gekennzeichnet, dass** das zweite Koppelelement (150) bezüglich des Getriebegehäuses schwenkbar und/oder verschieblich gelagert ist.

8. Hand-Werkzeugmaschine nach einem der vorhergehenden Ansprüche, **dadurch gekennzeichnet, dass** das zweite Koppelelement (150) an einem am Getriebegehäuse vorgesehenen Schwenklager, insbesondere einem vor eine Umfangswand des Getriebegehäuses vorstehenden Lagerzapfen oder in an der Umfangswand des Getriebegehäuses vorgesehenen Lageraufnahme, und/oder an dem Betätigungsglied (110) schwenkbar gelagert ist.

9. Hand-Werkzeugmaschine nach einem der vorhergehenden Ansprüche, **dadurch gekennzeichnet, dass** das zweite Koppelelement (150) in eine sich bogenförmig um die Betätigungschwenkachse erstreckende und/oder in einem Abstand um die Betätigungsschwenkachse angeordnete Führungsaufnahme des Betätigungsglieds (110) eingreift.

10. Hand-Werkzeugmaschine nach einem der vorhergehenden Ansprüche, **dadurch gekennzeichnet, dass** sie eine Rastanordnung (160) zum Verrasten des Betätigungsglieds (110) in mindestens einer Betätigungsposition aufweist.

11. Hand-Werkzeugmaschine nach einem der vorhergehenden Ansprüche, **dadurch gekennzeichnet, dass** das Betätigungsglied (110) an einer Linearführung (123) des Mitnahmerings (120) und/oder einem Maschinengehäuse der Hand-Werkzeugmaschine linear verschieblich gelagert ist, wobei vorteilhaft vorgesehen ist, dass das zweite Koppelelement (150) in einer Aussparung (124A) der Linearführung (123) aufgenommen ist und/oder dass die Linearführung (123) mindestens zwei in einem Winkelabstand bezüglich der Betätigungschwenkachse zueinander angeordnete Linearführungsabschnitte (123) aufweist.

12. Hand-Werkzeugmaschine nach einem der vorhergehenden Ansprüche, **dadurch gekennzeichnet, dass** das Betätigungsglied (110) mindestens einen Stützabschnitt zur Abstützung an dem Getriebegehäuse aufweist.

13. Hand-Werkzeugmaschine nach einem der vorhergehenden Ansprüche, **dadurch gekennzeichnet, dass** das Betätigungsglied (110) eine bogenförmige oder tonnenförmige Wandgestalt aufweist und/oder das Betätigungsglied (110) zueinander beabstandete Längsendbereiche des Mitnahmerings (120) miteinander verbindet.

14. Hand-Werkzeugmaschine nach einem der vorhergehenden Ansprüche, **dadurch gekennzeichnet, dass** das Getriebe ein Planetengetriebe ist und/oder das erste und/oder das zweite Stell-Getriebeelement ein Hohlrad (61, 62, 78) ist oder umfasst.

15. Hand-Werkzeugmaschine nach einem der vorhergehenden Ansprüche, **dadurch gekennzeichnet, dass** das Getriebe zwischen mindestens zwei Schaltstellungen (S1, S2, S3, S4) schaltbar ist, in denen Drehzahlverhältnisse zwischen dem Getriebeantrieb und dem Getriebeabtrieb voneinander verschieden sind, wobei das Getriebe eine erste Getrieberadanordnung (104) und mindestens eine zweite Getrieberadanordnung (105) umfasst, die jeweils mindestens ein Getrieberad sowie ein Schalt-Getriebeelement aufweisen, von denen eines der Schaltaktor und das andere das durch den Schaltaktor schaltbare Schalt-Getriebeelement ist, wobei bei beiden Getrieberadanordnungen (104, 105) das mindestens eine Getrieberad am Schalt-Getriebeelement der Getrieberadanordnung (104, 105) und/oder das Schalt-Getriebeelement an dem mindestens einen Getrieberad der Getrieberadanordnung (104, 105) abwälzen kann und das jeweilige Schalt-Getriebeelement zum Einstellen der Schaltstellungen (S1, S2, S3, S4) des Getriebes an der Getriebe-Haltestruktur (44A) zwischen mindestens zwei Stellpositionen örtlich verstellbar gelagert und/oder bezüglich der Getriebe-Haltestruktur (44A) zwischen einer unbeweglichen Stellung und beweglichen Stellung verstellbar ist, und dass zum Schalten des Getriebes zwischen mindestens zwei der Schaltstellungen (S1, S2, S3, S4) das Schalt-Getriebeelement (102) der ersten Getrieberadanordnung (104) einen Schaltaktor für die zweite Getrieberadanordnung (105) bildet, der zwischen einer ersten Stellposition und mindestens einer zweiten Stellposition schaltbar ist, in denen eine Beweglichkeit des Schalt-Getriebeelements (103) der zweiten Getrieberadanordnung (105) bezüglich der Getriebe-Haltestruktur verschieden ist und/oder der Schaltaktor außer Eingriff und in Eingriff mit dem mindestens einen Getrieberad (105A) der zweiten Getrieberadanordnung (105) ist.

## Claims

1. Manual machine tool having a drive motor, a gearbox and a tool holder, wherein a motor drive of the drive motor with a gearbox drive of the gearbox and a gearbox of the drive that is rotatable about an axis of rotation are coupled to the tool holder in a manner which permits rotation, wherein the gearbox has a first switching gear element (101) and a second switching gear element (102), which can be adjusted in a linear manner by means of an actuating device (100) in each case between a first setting position and a second setting position relative to a gearbox housing, wherein the actuating device (100) is coupled to the switching gear elements and has an actuating part (110) which is pivotably mounted relative to a machine housing of the manual machine tool about an actuating pivot axis and can be actuated manually by an operator of the manual machine tool, wherein the first switching gear element (101) can be adjusted in a linear manner along its setting axis by means of a pivot movement of the actuating part (110) about the actuating pivot axis using a deflecting gear (135), wherein the deflecting gear (135) comprises a carrier element (120) which extends in a ring-shaped manner around the gearbox housing and is rotatably mounted about the actuating pivot axis, which carrier element is coupled to the first switching gear element (101) to enable the linear adjustment of this by means of a first coupling element (140), wherein the actuating part (110) is mounted in a manner which permits the linear displacement on the carrier element (120) along an actuating longitudinal axis and is coupled to the at least one second switching gear element (102) by means of a second coupling element (150) to enable the linear displacement of the second switching gear element (102),
charcaterised in that the carrier element (120) is a carrier ring (120) and that between the carrier ring (120) and the first coupling element (140) an, in particular ring-shaped, transmission part (130) that can moved together with the carrier ring (120) about the actuating pivot axis, is arranged, wherein the transmission part (130) and the carrier ring (120) can be moved relative to one another and between the transmission part (130) and the carrier ring (120) a spring arrangement (128) actuable by a relative movement of the transmission part (130) and the carrier ring (120) is arranged for spring loading of the first setting gear element in at least one switch position.

2. Manual machine tool according to any one of the preceding claims, **characterised in that** at least one spring arrangement (128) is arranged between the actuating part (110) and the first switching gear element (101) and/or the second switching gear element (102), wherein it is advantageously provided that the spring arrangement between the second switching gear element (102) and the actuating part (110) is in particular exclusively provided by the second coupling element.

3. Manual machine tool according to any one of the preceding claims, **characterised in that** the first coupling element (140) and/or the second coupling element (150) is or comprises a spring element.

4. Manual machine tool according to any one of the preceding claims, **characterised in that** the first coupling element (140) and/or the second coupling element (150) is a spring bow (141, 159) or comprises a spring bow (141, 159), wherein the spring bow (141, 159) extends in a ring-shaped manner about the first switching gear element (101) or the second switching gear element (102).

5. Manual machine tool according to any one of the preceding claims, **characterised in that** the actuating part (110) is coupled to the second switching gear element (102) exclusively by means of the second coupling element (150) and/or by means of a single component.

6. Manual machine tool according to any one of the preceding claims, charcaterised in that at least one guide cam is arranged on the carrier ring (120) or a transmission part (130) that can be moved together with the carrier ring (120) about the actuating pivot axis, in which the first coupling element (140) engages in order to deflect the movement of the actuating part (110) about the actuating pivot axis into a linear movement of the first setting gear element.

7. Manual machine tool according to any one of the preceding claims, **characterised in that** the second coupling element (150) is pivotably and/or displaceably mounted relative to the gearbox housing.

8. Manual machine tool according to any one of the preceding claims, **characterised in that** the second coupling element (150) is pivotably mounted on a pivot bearing provided on a gearbox housing, in particular a bearing pin which protrudes from a circumference wall of the gearbox housing or a bearing recess arranged in the circumference wall of the gearbox housing, and/or on the actuating part (110).

9. Manual machine tool according to any one of the preceding claims, **characterised in that** the second coupling element (150) engages in a guide recess of the actuating part (110) extending in an arc-shape about the actuating pivot axis and/or arranged at a distance about the actuating pivot axis.

10. Manual machine tool according to any one of the preceding claims, **characterised in that** it has a locking arrangement (160) for locking the actuating part (110) in at least one actuating position.

11. Manual machine tool according to any one of the preceding claims, **characterised in that** the actuating part (110) is mounted linearly dispaceably on a linear guide (123) of the carrier ring (120) and/or a machine housing of the manual machine tool, wherein it is advantageously provided that the second coupling element (150) is received in a slot (124A) of the linear guide (123) and/or that the linear guide (123) comprises at least two linear guide sections (123) arranged at an angular distance from one another relative to the actuating pivot axis.

12. Manual machine tool according to any one of the preceding claims, **characterised in that** the actuating part (110) connects longitudinal end areas of the carrier ring (120) that are at a distance from one another to one another.

13. Manual machine tool according to any one of the preceding claims, **characterised in that** the actuating part (110) has an arch-shaped or barrel-shaped wall design and/or the actuating part (110) connects longitudinal end areas of the carrier ring (120) that are at a distance from one another to one another

14. Manual machine tool according to any one of the preceding claims, **characterised in that** the gearbox is a planetary gear and/or the first and/or second setting gear element is or comprises a hollow wheel (61, 62, 78).

15. Manual machine tool according to any one of the preceding claims, **characterised in that** the gearbox can be switched between at least two switch positions (S1, S2, S3, S4) in which the speed ratios between the gearbox drive and the gearbox output are different to one another, wherein the gearbox comprises a first gear wheel arrangement (104) and at least a second gear wheel arrangement (105), each of which has at least one gear wheel and a switching gear element, of which one is a switch actuator and the other the switching gear element that can be switched by the switch actuator, wherein the two gear wheel arrangements (104, 105) can roll the at least one gear wheel on the switching gear element of the gear wheel arrangement (104, 105) and/or the switching gear element on the at least one gear wheel of the gear wheel arrangement (104, 105) and the respective switching gear element is mounted in a locally adjustable manner between at least two setting positions in order to adjust the switch positions (S1, S2, S3, S4) of the gearbox on the gearbox holding structure (44A) and/or is adjustable between an immobile position and a mobile position relative to the gearbox holding structure (44A), and in order to switch the gearbox between at least two of the switch positions (S1, S2, S3, S4) the switching gear element (102) of the first gear wheel arrangement (104) forms a switch actuator for the second gear wheel arrangement (105) which can be switched between a first setting position and at least a second setting position, in which a movement of the switching gear element (103) of the second gear wheel arrangement (105) is different relative to the gearbox holding structure and/or the switch actuator is disengaged and engaged with the at least one gear wheel (105A) of the second gear wheel arrangement (105).

## Revendications

1. Machine-outil manuelle avec un moteur d'entraînement, un engrenage et un logement d'outil, dans laquelle une sortie de moteur du moteur d'entraînement est couplée en rotation à un entraînement d'engrenage de l'engrenage et une sortie d'engrenage, pouvant tourner autour d'un axe de rotation, de l'engrenage est couplée en rotation au logement d'outil, dans laquelle l'engrenage présente un premier élément l'engrenage de commutation (101) et un deuxième élément l'engrenage de commutation (102), qui peuvent être ajustés linéairement à l'aide d'un système d'actionnement (100) respectivement entre une première position de réglage et une deuxième position de réglage par rapport à un boîtier d'engrenage, dans laquelle le système d'actionnement (100) est couplé aux éléments l'engrenage de commutation et présente un organe d'actionnement (110) monté de manière à pouvoir pivoter autour d'un axe de pivotement d'actionnement par rapport à un boîtier de machine de la machine-outil manuelle et pouvant être actionné manuellement par un utilisateur de la machine-outil manuelle, dans laquelle le premier élément l'engrenage de commutation (101) peut être ajusté linéairement le long de son axe de réglage à l'aide d'un engrenage de renvoi (135) par un déplacement par pivotement de l'organe d'actionnement (110) autour de l'axe de pivotement d'actionnement, dans laquelle l'engrenage de renvoi (135) comprend un élément d'entraînement (120) s'étendant avec une forme annulaire autour du boîtier l'engrenage et monté de manière à pouvoir tourner autour de l'axe de pivotement d'actionnement, qui est couplé au premier élément l'engrenage de commutation (101) pour son ajustement linéaire à l'aide d'un premier élément de couplage (140), dans laquelle l'organe d'actionnement (110) est monté de manière à pouvoir coulisser linéairement le long d'un axe longitudinal d'actionnement sur l'élément d'entraînement (120) et est couplé à l'au moins un deuxième élément d'engrenage de commutation (102) à l'aide d'un deuxième élément de couplage (150) pour un coulissement linéaire du deuxième élément d'engrenage de commutation (102), **caractérisée en ce que** l'élément d'entraînement (120) est une bague d'entraînement (120), et qu'un organe de transmission (130) en particulier de forme annulaire pouvant être entraîné autour de l'axe de pivotement d'actionnement par la bague d'entraînement (120) est disposé entre la bague d'entraînement (120) et le premier élément de couplage (140), dans laquelle l'organe de transmission (130) et la bague d'entraînement (120) sont mobiles l'un par rapport à l'autre et un ensemble de ressort (128) pouvant être actionné par un déplacement relatif de l'organe de transmission (130) et de la bague d'entraînement (120) destiné à exposer le premier élément d'engrenage de réglage à l'action d'un ressort est disposé dans au moins une position de commutation.

2. Machine-outil manuelle selon la revendication précédente,
**caractérisée en ce qu'**au moins un ensemble de ressort (128) est disposé entre l'organe d'actionnement (110) et le premier élément d'engrenage de commutation (101) et/ou le deuxième élément d'engrenage de commutation (102), dans laquelle il est prévu de manière avantageuse que l'ensemble de ressort est fourni, en particulier exclusivement, par le deuxième élément de couplage entre le deuxième élément d'engrenage de commutation (102) et l'organe d'actionnement (110).

3. Machine-outil selon l'une quelconque des revendications précédentes,
**caractérisée en ce que** le premier élément de couplage (140) et/ou le deuxième élément de couplage (150) sont ou comprennent un élément de ressort.

4. Machine-outil selon l'une quelconque des revendications précédentes, **caractérisée en ce que** le premier élément de couplage (140) et/ou le deuxième élément de couplage (150) sont un étrier de ressort (141, 159) ou comprennent un étrier de ressort (141, 159), dans laquelle l'étrier de ressort (141, 159) s'étend avec une forme annulaire autour du premier élément d'engrenage de commutation (101) ou du deuxième élément d'engrenage de commutation (102).

5. Machine-outil manuelle selon l'une quelconque des revendications précédentes, **caractérisée en ce que** l'organe d'actionnement (110) est couplé au deuxième élément d'engrenage de commutation (102) exclusivement par le deuxième élément de couplage (150) et/ou par un unique composant.

6. Machine-outil manuelle selon l'une quelconque des revendications précédentes, **caractérisée en ce qu'**est disposée, sur la bague d'entraînement (120) ou un organe de transmission (130) pouvant être entraîné autour de l'axe de pivotement d'actionnement par la bague d'entraînement (120), au moins une coulisse de guidage, avec laquelle le premier élément de couplage (140) vient en prise, pour renvoyer le déplacement de l'organe d'actionnement (110) autour de l'axe de pivotement d'actionnement en un déplacement linéaire du premier élément d'engrenage de réglage.

7. Machine-outil manuelle selon l'une quelconque des revendications précédentes, **caractérisée en ce que** le deuxième élément de couplage (150) est monté de manière à pouvoir pivoter et/ou à pouvoir coulisser par rapport au boîtier d'engrenage.

8. Machine-outil manuelle selon l'une quelconque des revendications précédentes, **caractérisée en ce que** le deuxième élément de couplage (150) est monté de manière à pouvoir pivoter sur un palier de pivotement prévu sur le boîtier d'engrenage, en particulier un tourillon de montage faisant saillie devant une paroi périphérique du boîtier d'engrenage ou dans un logement de montage prévu sur la paroi périphérique du boîtier de transmission, et/ou sur l'organe d'actionnement (110).

9. Machine-outil manuelle selon l'une quelconque des revendications précédentes, **caractérisée en ce que** le deuxième élément de couplage (150) vient en prise avec un logement de guidage de l'organe d'actionnement (110) s'étendant en forme d'arc autour de l'axe de pivotement d'actionnement et/ou disposé à une distance autour de l'axe de pivotement d'actionnement.

10. Machine-outil manuelle selon l'une quelconque des revendications précédentes, **caractérisée en ce qu'**elle présente un ensemble d'enclenchement (160) destiné à enclencher l'organe d'actionnement (110) dans au moins une position d'actionnement.

11. Machine-outil manuelle selon l'une quelconque des revendications précédentes, **caractérisée en ce que** l'organe d'actionnement (110) est monté de manière à pouvoir coulisser linéairement sur un guidage linéaire (123) de la bague d'entraînement (120) et/ou un boîtier de machine de la machine-outil manuelle, dans laquelle il est prévu de manière avantageuse que le deuxième élément de couplage (150) est logé dans un évidement (124A) du guidage linéaire (123) et/ou que le guidage linéaire (123) présente au moins deux sections de guidage linéaire (123) disposées l'une par rapport à l'autre à une distance angulaire par rapport à l'axe de pivotement d'actionnement.

12. Machine-outil manuelle selon l'une quelconque des revendications précédentes, **caractérisée en ce que** l'organe d'actionnement (110) présente au moins une section d'appui destinée au soutien sur le boîtier de transmission.

13. Machine-outil manuelle selon l'une quelconque des revendications précédentes, **caractérisée en ce que** l'organe d'actionnement (110) présente une forme de paroi en forme d'arc ou en forme de tonneau et/ou l'organe d'actionnement (110) relie entre elles des zones d'extrémité longitudinale tenues à distance les unes par rapport aux autres de la bague d'entraînement (120).

14. Machine-outil manuelle selon l'une quelconque des revendications précédentes, **caractérisée en ce que** la transmission est un engrenage planétaire, et/ou le premier et/ou le deuxième élément d'engrenage de réglage sont ou comprennent une couronne (61, 62, 78).

15. Machine-outil manuelle selon l'une quelconque des revendications précédentes, **caractérisée en ce que** l'engrenage peut être commuté entre au moins deux positions de commutation (S1, S2, S3, S4), dans lesquelles des rapports de vitesse de rotation entre l'entraînement d'engrenage et la sortie d'engrenage sont différents les uns des autres, dans laquelle l'engrenage comprend un premier ensemble de roue d'engrenage (104) et au moins un deuxième ensemble de roue d'engrenage (105), qui présentent respectivement au moins une roue d'engrenage ainsi qu'un élément d'engrenage de commutation, dont un est l'activateur de commutation et l'autre est l'élément d'engrenage de commutation pouvant être commuté par l'activateur de commutation, dans laquelle dans les deux ensembles de roue d'engrenage (104, 105), l'au moins une roue d'engrenage peut rouler sur l'élément d'engrenage de commutation de l'ensemble de roue d'engrenage (104, 105) et/ou l'élément d'engrenage de commutation peut rouler sur l'au moins une roue d'engrenage de l'ensemble de roue d'engrenage (104, 105), et l'élément d'engrenage de commutation respectif est monté de manière ajustable spatialement entre au moins deux positions de réglage pour régler les positions de commutation (S1, S2, S3, S4) de l'engrenage sur la structure de maintien d'engrenage (44A) et/ou peut être ajusté entre une position immobile et une position mobile par rapport à la structure de maintien d'engrenage (44A), et que pour commuter l'engrenage entre au moins deux des positions de commutation (S1, S2, S3, S4), l'élément d'engrenage de commutation (102) du premier ensemble de roue d'engrenage (104) forme un activateur de commutation pour le deuxième ensemble de roue d'engrenage (105), qui peut être commuté entre une première position de réglage et au moins une deuxième position de réglage, dans lesquelles une mobilité de l'élément d'engrenage de commutation (103) du deuxième ensemble de roue d'engrenage (105) est différente par rapport à la structure de maintien d'engrenage et/ou l'activateur de commutation n'est pas en prise et est en prise avec l'au moins une roue d'engrenage (105A) du deuxième ensemble de roue d'engrenage (105).
